# EUROPÄISCHE PATENTANMELDUNG

(11) **EP 2 799 349 A1**
(43) Veröffentlichungstag der Anmeldung: **05.11.2014**
(21) Anmeldenummer: 14001476.2
(22) Anmeldetag: 24.04.2014
(51) Int. Cl.: B65B 35/26, B65B 35/44, B65B 35/46, B65B 35/50, B65B 57/14, B65G 15/14, B65G 47/08, B65G 47/84, B65G 47/86, B25B 25/00

(54) **Verfahren zur Gruppierung von Artikeln zu Artikelstangen und Gruppiereinrichtung sowie Verpackungsmaschine mit einer solchen nebst Steuereinrichtung für Produkt-Halteeinrichtungen**

(30) Priorität: 30.04.2013 DE 102013007387
(71) Anmelder: THEEGARTEN-PACTEC GMBH & CO. KG, 01237 Dresden (DE)
(72) Erfinder: Seibt, Wilfried, 01219 Dresden (DE); Matthias Bergmann, 01217 Dresden (DE); Michael Sickert, 01099 Dresden (DE); Gert Wehner, 01328 Dresden (DE)
(74) Vertreter: Grünecker, Kinkeldey, Stockmair & Schwanhäusser

(57) **Zusammenfassung**

Die vorliegende Erfindung betrifft ein Verfahren zur Bildung von Artikelstangen aus Einzelartikeln, insbesondere für Stangenverpackungen, wobei vereinzelte, vorzugsweise verpackte Artikel von einer Abgabeeinrichtung an eine Artikelstangen-Bildungseinrichtung übergeben werden, in der eine vorbestimmte Anzahl von Einzelartikein zu einer Artikelstange gruppiert werden und diese Artikelstange an eine Übergabeeinrichtung übergeben wird, wobei in Abhängigkeit von einem Beginn der Bereitstellung einer vorbestimmten, vorzugsweise variablen Anzahl von Einzelartikeln und/oder von einem Zeitraum, der zur Gruppierung der vorbestimmten Anzahl von Einzelartikeln zu einer Artikelstange benötigt wird, eine Mehrzahl von Artikelstangebildnern der Artikelstangen-Bildungseinrichtung zur Gruppierung der Einzelartikel zu einer Artikelstange und zur Übergabe der Artikelstange an die Übergabeeinrichtung separat und unabhängig voneinander angesteuert werden. Die Erfindung betrifft ferner eine Gruppiereinrichtung (1) und eine Steuereinrichtung für Produkthalteeinrichtungen, insbesondere für eine Verpackungsmaschine zur Verpackung kleinstückiger Produkte, wie kleinstückiger Süßwaren, mit einem Rotationskopf (1) mit einer Mehrzahl von mit diesem umlaufenden Klemmeinheiten (3), wobei jede Klemmeinheit ein Klemmbackenpaar (4) sowie zumindest eine Steuerrolle (7) in Kontakt mit einer ersten Steuerkurve (9) für eine Öffnungs- und Schließbewegung des Klermmbackenpaares (4) aufweist, wobei eine weitere Einrichtung (13, 16, 18) zur Initiierung einer willkürlichen Öffnungsbewegung des Klemmbackenpaares (4) vorgesehen ist.

## Beschreibung

Die vorliegende Erfindung betrifft ein Verfahren zur Bildung von Artikelstangen aus Einzelartikeln, insbesondere für Stangenpackungen sowie eine Gruppiereinrichtung, insbesondere zur Durchführung des Verfahrens. Die Erfindung betrifft ferner eine Verpackungsmaschine mit zumindest einer solchen Gruppiereinrichtung sowie ein Steuereinrichtung für Produkt-Halteeinrichtungen.

Für die Verpackung kleinstückiger Gegenstände, wie zum Beispiel Süßwaren, wie Bonbons (zum Beispiel Weich- oder Hartkaramellen) ist es bekannt, diese Artikel zum Einzelverpacken durch eine auf der Grundlage eines kontinuierlichen Rotations-Transportprinzips arbeitenden Verpackungsmaschine hindurch zu bewegen und auf diese Weise die kleinstückigen Artikel einzeln zu verpacken. Bei derartigen, auf dem "kontinuierlichen Prinzip" (miteinander "kämmende" Haltebackenpaare übergeben die Artikel von einem Kopf zum nächsten) insbesondere Bonbonverpackungsmaschinen können im Hochleistungsbereich mit Verpackungsgeschwindigkeiten von bis zu ca. 2000 Stück pro Minute arbeiten.

Schwierigkeiten bereitet bei derartigen Hochleistungs-Verpackungsmaschinen die gleichermaßen wirtschaftliche weitere Prozessgestaltung zum Beispiel zur Bildung von Artikelstangen, das heißt der Zusammenordnung einer Mehrzahl von einzelverpackten Artikeln, die zu einer gemeinsamen Umhüllung als Stange, zum Beispiel in einer nachgeordneten Flowpack-Verpackungsmaschine vorgesehen sind.

Ein weiteres Problem bei der Bildung und gemeinsamen Verpackung derartiger Artikelstangen aus mehren einzelverpackten Artikeln in einem sogenannten Stangenpacker besteht in der flexiblen Gruppierung beziehungsweise Bildung der Artikelstangen die auch dann stets eine vorbestimmte, im Allgemeinen konstante, stets gleiche oder jedenfalls vorbestimmte Anzahl von Einzelartikeln enthalten muss, wenn zum Beispiel fehlerhafte Artikel oder unverpackt gebliebene Artikel im Verpackungsprozess ausgesondert werden müssen, da das Erfordernis besteht, dass die als Sammelverpackung abgegebene Artikelstange keinerlei fehlerhafte Artikel enthalten darf.

Stangenpacker der vorgenannten Art sind zum Beispiel aus der EP 806 358 B1 oder EP 806 385 B1 der Anmelderin bekannt.

Der Erfindung liegt daher die Aufgabe zugrunde, ein Verfahren und eine Gruppiereinrichtung zur gruppenweisen Bereitstellung von insbesondere einzelverpackten Artikeln zur Bildung von Artikelstangen aus, vorzugsweise verpackten, Einzelartikeln insbesondere Stangenpackungen anzugeben, die sich durch erhöhte Flexibilisierung und die Möglichkeit auszeichnen, die Zuordnung von fehlerhaften oder fehlerhaft verpackten Artikeln zu einer Artikelstange zu vermeiden, eine variable Länge, das heißt vorbestimmt variable Anzahl von Einzelartikeln in einer Artikelstange gestattet und auch hinsichtlich der Zuführung zu einer nachgeordneten, die Artikelstange verpackenden Verpackungsmaschine eine erhöhte Flexibilität aufweist.

Der Erfindung liegt ferner die Aufgabe zugrunde, eine Verpackungsmaschine mit einer derartigen Gruppiereinrichtung zur Bildung von Artikelstangen aus insbesondere verpackten Einzelartikeln sowie eine Verpackungsmaschinenlinie (Kombination mehrerer Verpackungsmaschinen) mit einer derartigen Gruppiereinrichtung anzugeben sowie eine Steuereinrichtung für eine Produkt-Halteeinrichtung, vorzugsweise vorgesehen stromauf einer Gruppiereinrichtung.

Die vorgenannten Aufgaben werden erfindungsgemäß durch die Ansprüche 1, 7, 13, 18 und 21 gelöst. Bevorzugte Ausführungsformen sind Gegenstand der Unteransprüche.

Die Erfindung zeichnet sich dadurch aus, dass sowohl der Prozess des Anstapelns, das heißt der Bildung einer Gruppe von Artikeln, vorzugsweise in kontinuierlicher Zuführung aus einem Rotationskopf (Wendekopf) in einer diesem nachgeordneten Stangenbildungseinrichtung mit hoher Flexibilität und in zeitlicher und sachlicher Hinsicht (das heißt, dass nur fehlerfrei verpackte Einzelartikel zur Anstaplung in der Stangenbildungseinrichtung zugelassen werden), dadurch erfolgt, dass in Abhängigkeit von einem Beginn der Bildung einer Gruppe (= Beginn der Bereitstellung einer vorbestimmten Anzahl von Einzelartikeln) und/oder in Abhängigkeit von einem Zeitraum, der zur Bereitstellung einer vorbestimmten Anzahl von Einzelartikeln (Bildung einer Artikelstange) benötigt wird oder zur Verfügung steht, unterschiedliche Stangenbildner der Stangenbildungseinrichtung zur Gruppierung der Einzelartikel zu der Artikelstange vorgesehen sind, so dass zwischen dem die Einzelartikel zuführenden Kopf und der nachfolgenden Gruppiereinrichtung (Artikelstangen-Bildungseinrichtung) ein flexibler, individuell artikel- oder zeitgesteuerter Zusammenhang gegeben ist. Dieser wird vorzugsweise dadurch bewirkt, dass individuell ansteuerbare Stangenbildner zur Bildung einer Artikelstange in der Anstapelposition verfügbar gemacht werden, sodass problemlos unterschiedliche Zeiträume für die Bildung einer Artikelstange aus einer vorbestimmten Anzahl von Einzelartikeln oder auch für die abfolgende Bildung von Artikelstangen mit einer unterschiedlichen (vorbestimmten) Anzahl von Einzelartikeln realisiert werden können (= "intelligentes Anstapeln").

Vorzugsweise ist in korrespondierender Anwendung dieses Prinzips auch die Übergabe der zu einer Artikelstange gruppierten Einzelartikel an eine nachfolgende Artikelstange-Längsfördereinrichtung, vorzugsweise unter Vermittlung einer entsprechenden Übergabeeinrichtung vorgesehen, die ebenfalls eine Mehrzahl von unabhängig voneinander ansteuerbaren und antreibbaren Übergabeförderern aufweist, deren Mitnehmerorgane für die Weiterförderung der von der Stangenbildungseinrichtung gebildeten Artikelstange aus einer vorbestimmten Anzahl von im allgemeinen verpackten Einzelartikeln an eine nachgeordnete Artikelstangen-Längsfördereinrichtung, die zum Beispiel zu einer Flow-Pack-Maschine zur Verpackung der Artikelstange führt, vorgesehen sind, sodass vorzugsweise auch diese Schnittstelle zwischen der Artikelstangen-Bildungseinrichtung und einem Artikelstangen-Längsförderer in entsprechender Weise flexibilisiert und keinem vorfixierten Zeitmanagement unterworfen ist. Das hilft, sowohl die Anstapelung von Einzelartikeln einer Artikelstange als auch die Übergabe von Artikelstangen an eine Längsfördervorrichtung eines Stangenpackers (wie z. B. einer Flowpack-Maschine) erfolgen taktangepasst einerseits an die vorangehende, stromauf befindliche Einzelverpackungseinrichtung und andererseits an die nachgeordnete Artikelstangen-Zuführeinstellung eines Stapelpackers.

Auf diese Weise gelingt es, auch einen Stangenpacker in Verbindung mit einer im Hochleistungsbereich arbeitenden und auf dem kontinuierlichen Prinzip rotierender Verpackungsköpfe basierenden Einzelartikel-Verpackungsmaschine nachzuordnen, Fehlverpackungen oder Artikelfehler zu berücksichtigen und fehlerhafte Artikelstangen (Artikelstangen mit fehlerhaften Einzelartikeln) zu vermeiden und zugleich Artikelstangen in einer Sammelverpackung, zum Beispiel in einer Flow-Pack-Verpackung, mit hoher Effizienz und Lage- sowie Verpackungsgenauigkeit bereitzustellen. Zugleich kann eine Synchronisierung an ein Arbeitsverhalten (Takt) eines nachgeordneten Stangenpackers erreicht werden, da die Artikelstangen (= gruppierte) Artikel aus der Gruppiereinrichtung in variablen Abständen kontinuierlich oder intermittierend abgefördert werden können.

Vorzugsweise ist eine Fördervorrichtung als Übergabeeinrichtung mit mindestens zwei parallelen, den zu fördernden Gegenstand (Artikelstange) bewegenden Förderern vorgesehen, wobei jeder Förderer zumindest ein Paar von vorzugsweise in einem festen Abstand zueinander angeordneten Mitnehmern aufweist, zwischen denen der zu fördernde Gegenstand (Artikelstange) aufnehmbar ist, und wobei jeder Förderer mit einer separaten Antriebseinheit verbunden ist und die Antriebseinheiten unabhängig voneinander steuerbar sind, so dass die Position der Mitnehmerpaare der verschiedenen, koaxial zueinander angeordneten Förderer relativ zueinander verfahrbar bzw. verstellbar, d. h. variabel zueinander positionierbar sind. Vorzugsweise sind zwei derartige Fördervorrichtungen opponierend und unter Synchronisation zugehöriger Förderer beider Fördervorrichtungen vorgesehen und zwar beiderseits eines Artikelstangen-Transportweges der Übergabeeinrichtung.

Für eine bestimmte Verpackungs- bzw. Stapelbildungsaufgabe (Artikelstange) mit einer vorbestimmten Anzahl von Einzelartikeln sind die Mitnehmer der Förderer bevorzugt mit einem festen Abstand voneinander angeordnet.

Die Einstellung der Mitnehmer kann hinsichtlich ihres Abstande, ihrer Größe etc. der Verpackungsaufgabe d. h. der Stapellänge angepasst und geändert werden. Die Abstände der Mitnehmer können in Abhängigkeit von Sensorsignalen, insbesondere aus dem Verpackungsprozess für die einzelnen Artikel oder eines nachgeordneten Stangenpackers oder auch der Bildung der Artikelstangen selbst, z. B. bei einer "in-situ" Veränderung der Anzahl der Artikel pro Artikelstange variabel steuerbar und einstellbar sein.

Indem die Mitnehmerpaare der verschiedenen Förderer relativ zueinander verlagerbar bzw. verstellbar sind, lassen sich variable Abstände zwischen den die zu befördernden Gegenstände (Artikelstange) aufnehmenden Mitnehmer und bzw. Mitnehmerpaaren herstellen. Diese Abstände werden durch ein Anpassen des Geschwindigkeitsverlaufes der einzelnen Förderer so eingestellt, dass durch die Fördervorrichtung ein optimaler Arbeitsverlauf mit einer möglichst hohen Verpackungsleistung erreicht wird und zwar unter maßgebender Berücksichtigung der Arbeitsgeschwindigkeit der vorgelagerten Einzelartikel-Verpackungsköpfe, wie der Möglichkeit des in der Anstapelposition befindlichen Förderers Leertakte abzuwarten und nur vollständige Artikelstangen fehlerfrei einzelverpackter Artikel weiter zu fördern. Insbesondere kann durch die mehrteilige, insbesondere mehrsträngige oder aus mehreren, unabhängigen Gruppierradsegmenten (Rädern) bestehende Komposition der Fördervorrichtung aus mehreren parallelen Förderern erreicht werden, dass immer nur einer der Förderer mit der vorgelagerten Anstapelstation, z. B. einer Station zum Einstapeln von Artikeln in ein Mitnehmerpaar im Eingriff steht, so dass die übrigen Förderer und ihre Mitnehmerpaare unabhängig arbeiten und auch mit erhöhter Fördergeschwindigkeit betrieben werden können, bzw. Förderaufgaben für bereits gebildete Artikelstapel wahrnehmen können, ohne dass ihre Bewegung von der Einstapelgeschwindigkeit in der Anstapelstation limitiert wird. Somit wird eine zeitlich unbeschränkte Entkopplung der Fördervorrichtung von den vorangehenden Prozessschritten der Verpackungsmaschine ermöglicht, da bei Fehlern in den vorgelagerten Verpackungseinheiten weiterhin über die übrigen, nicht mit der Anstapelstation im Eingriff stehenden Förderer die nachgelagerten Verpackungseinheiten über die Übergabestation und die Übergabeeinrichtung mit Produkten (Artikelstangen) weiterversorgt werden kann, so dass ein Stillstand der Fördervorrichtung oder der nachgelagerten Maschineneinheiten oder ein Einfluss von Leertakten auf die Stangenbildung (Gruppierung) vermieden werden kann. Die Fördervorrichtung bietet somit durch ihre mehrfachparallele Ausgestaltung eine Pufferfunktion, welche einen Stillstand der Fördervorrichtung und der nachgelagerten Verpackungseinheiten oder einen Einfluss von Leertakten (kein Artikel) auf die Stangenbildung vermeidet, wobei der betreffende Förderer in der Anstapelstation einfach "warten" kann, bis die vorbestimmte Anzahl von fehlerfreien Artikeln in der Aufnahmeposition des betreffenden Förderers angestapelt (gruppiert) ist.

In einer bevorzugten Ausführungsform sind die mehreren Förderer der Fördervorrichtung jeweils als Riemen, eine Kette oder als eine rotierende Scheibe bzw. Rad ausgebildet. Die Anzahl der benachbarten Riemen, Ketten oder Scheiben bzw. Räder kann variieren, wobei jedoch immer mindestens zwei notwendig sind, um die gewünschte Veränderung der Abstände zwischen den die zu fördernden Gegenstände (Artikelstangen) aufnehmenden Mitnehmerpaaren verschiedener, benachbarter Förderer einrichten zu können.

In einer weiter bevorzugten Ausgestaltung der Erfindung sind die Mitnehmerpaare der verschiedenen Förderer eines Gruppierrades in Förderrichtung fluchtend hintereinander liegend ausgerichtet, d. h. in einer, insbesondere vertikal ausgerichtete Ebene angeordnet, so dass die zu fördernden Gegenstände (angestapelte Artikelstangen) in einer gemeinsamen übereinstimmenden Linie gefördert werden. Durch diese fluchtende Ausrichtung der Mitnehmerpaare der verschiedenen Förderer des Gruppierrades sind keine aufwendigen konstruktiven Anpassungen an der Aufnahmestation oder der Übergabestation erforderlich, da die Mitnehmerpaare der verschiedenen, unabhängig, individuell antreibbaren Förderer (z. B. Guppierradsegmente) den zu fördernden Gegenstand (Artikelstange) immer an einer übereinstimmenden Aufnahmeposition (Anstapelposition) bilden. Die Aufnahme bzw. Übergabe der Artikel in die bzw. aus der durch ein Mitnehmerpaar gebildeten Tasche eines Förderers erfolgt somit immer auf gleiche Weise, d.h. vollkommen unabhängig davon mit welchem der individuelle Förderer (Gruppierradsegment) das jeweilige Mitnehmerpaar verbunden ist. Mit anderen Worten arbeiten die Mitnehmer der einzelnen individuell angetriebenen Förderer der Gruppiereinrichtung stets auf die gleiche Anstapelposition zur Anstapelung der vereinzelt zugeförderten, vorzugsweise verpackten Artikel.

In noch einer weiter bevorzugten Ausführungsform sind die Mitnehmerpaare so ausgerichtet, dass sie alle oberhalb, d. h. an einer nach außen weisenden Oberseite bzw. einem Außenumfang des jeweiligen Förderers angeordnet sind. Dadurch wird eine besonders kompakte, platzsparende Bauweise der Fördervorrichtung erzielt, da für den Produkttransport nur die Breite eines der parallelen Förderer beansprucht wird, während die übrigen Förderer mit den weiteren Mitnehmerpaaren und dem Weitertransport einer Artikelstange zu der Übergabeeinrichtung oder der Rückkehr eines Förderers und einer seiner Taschen in die Anstapelposition bzw. eine Position benachbart zu dieser, dienen. Der zu fördernde Gegenstand (Artikelstange) erstreckt sich somit nur über die Breite eines der Förderer, wobei dieser Förderer in Übereinstimmung mit einer Förderlinie ist, entlang derer die Gegenstände (Artikelstangen) geführt werden.

In weiterer Ausgestaltung der erfindungsgemäßen Gruppiereinrichtung kann es sich bei dem zu fördernden Gegenstand um einen aus mehreren, insbesondere verpackten Einzelprodukten bestehenden Artikelstapel handeln, wobei diese Einzelprodukte in einer Anstapelstation zwischen ein Mitnehmerpaar eines Förderers anstapelbar sind, und wobei die Geschwindigkeit des mit der Anstapelstation im Eingriff stehenden Förderers auf die Geschwindigkeit des Anstapelvorganges in der Anstapelstation synchronisierbar (taktangepasst) ist. Die Gruppiereinrichtung ist insbesondere für eine stapelnde Aufnahme von Artikeln geeignet, da nur die Geschwindigkeit des jeweiligen Förderers, dessen Mitnehmerpaar sich im Arbeitseingriff mit der Anstapelstation befindet, auf die Einstapelgeschwindigkeit gedrosselt werden muss, während die weiteren Förderer unbeeinflusst vom Anstapelvorgang, d.h. mit erhöhter Fördergeschwindigkeit, die angestapelten Produkte als Artikelstange weiterführen und an nachgelagerte Maschinenteile oder Verpackungsmaschinen übergeben können. Insbesondere kann hierdurch auch eine rasche, beschleunigte Rückführbewegung eines Förderers und der zugehörigen Mitnehmer in die Anstapelposition (Aufnahmeposition) bzw. eine dieser unmittelbar benachbarten "stand-by"-Position erfolgen.

In noch einer weiteren Ausgestaltung der erfindungsgemäßen Gruppiereinrichtung ist der zu fördernde Gegenstand (Artikelstange aus in vorbestimmter Anzahl an gestapelten Einzelartikeln) an einer Übergabestation aus dem jeweiligen Mitnehmerpaar eines Förderers entnehmbar, wobei die Geschwindigkeit des mit der Übergabestation im Eingriff stehenden Förderers auf die Geschwindigkeit des Entnahmevorganges in der Übergabestation synchronisierbar ist. Durch die Verwendung mehrerer paralleler Förderstränge ist ebenfalls eine Anpassung der Geschwindigkeit desjenigen Förderers an die Geschwindigkeit des nachgelagerten Maschinenteiles (z.B. einer weiteren Mitnehmerkette o. ä.) möglich, dessen Mitnehmerpaar an der Übergabestation zur Abgabe des Gegenstandes an diesen nachgelagerten Maschinenteil bereitsteht, während die übrigen Förderer von dieser Geschwindigkeitsanpassung unbeeinflusst bleiben, so dass insbesondere auch eine Entkopplung der Taktzeiten der Anstapelstation von den Taktzeiten eines der Übergabestation nachgeordneten Stangenpackers (z. B. Flow-Pack-Maschine) ermöglicht wird.

In einer bevorzugten Ausführungsform der Erfindung ist als Gruppiereinrichtung für insbesondere in Einzelverpackungen verpackte Artikel zur Bildung von Artikelstangen aus diesen Artikeln zur Zufuhr zu einer Stangenverpackungsmaschine eine stangenbildende Rotationseinrichtung und eine Stangen-Übergabeeinrichtung zur Verbindung mit einer Stangenlängsfördereinrichtung vorgesehen, wobei die stangenbildende Rotationseinrichtung vorzugsweise ein Gruppierrad ist, das eine Mehrzahl koaxialer, unabhängiger Gruppierradsegmente aufweist, wobei jedes Gruppierradsegment (hier auch als Rad bezeichnet) vorzugsweise unabhängig zu einer Rotation um eine gemeinsame Achse ansteuerbar ist und zumindest eine Tasche zur Aufnahme einer Mehrzahl von Artikeln aufweist, wobei vorzugsweise die Tasche in ihrer Länge im Wesentlichen der Länge einer Artikelstange aus einzelnen Artikeln (mit einem gewissen Übermaß der Tasche) entspricht. Vorzugsweise weisen die Gruppierradsegmente mehrere, durch Mitnehmerpaare gebildete bzw. begrenzte Taschen zur Aufnahme einer Mehrzahl von Artikeln auf, wobei zumindest im Bereich eines Anstapel- und Artikelaufnahmebereiches sowie eines Übergabebereiches zu einer Artikelübergabeeinrichtung alle Taschen bzw. artikelaufnehmende Bereiche der Gruppierradsegmente in einer gemeinsamen Rotationsebene insbesondere einer Vertikalebene angeordnet sind.

Auf diese Weise ist jedes Gruppierradsegment (Rad), vorzugsweise durch individuell zugeordnete und unabhängig ansteuerbare Servomotoren einzeln um eine gemeinsame Achse oder Nabe drehbar, sodass z. B. das mit einer Tasche in einer Artikelaufnahme-Position sich befindende Gruppierradsegment auch auf die Komplettierung einer Stapelbildung und weiterer Artikel warten kann (z. B. wenn ein Artikel als fehlerhaft vor Erreichen der Gruppiereinrichtung ausgeschleust werden muss und ein Leertakt entsteht), während die anderen Gruppierradsegmente mit der Weiterförderung eines Artikelstapels zu einer Übergabeeinrichtung oder der Abgabe an eine nachgeordnete Fördereinrichtung (z. B. zu einer Flow-Pack-Maschine) im Einsatz sind oder sich auf einer Rückkehrbewegung in die Anstapelposition befinden. Auf diese Weise ist es auch möglich, variable Abstände zwischen den aus angestapelten Artikeln gebildeten Artikelstangen einzustellen und es ist eine kontinuierliche oder diskontinuierliche Abgabe der Artikelstangen an eine nachfolgende Verpackungsmaschine oder -einrichtung möglich, wie auch ein "intelligentes Anstapeln", d. h. eine Herstellung vollständiger Artikelstangen oder Produktstapel (mit vorzugsweise immer der gleichen Artikelanzahl pro Artikelstange) und zwar auch dann, wenn in Folge von Leertakten durch Fehlprodukte im vorausgehenden Verpackungsprozess, eine zeitliche Verzögerung der Stapelbildung oder der Komplettierung eines Artikelstapels auftritt. Das heißt, die Gruppierung der Artikel "wartet" bei auftretenden Leertakten in der Einzelverpackung der Artikel bis die gebildete Artikelstange (bestehend aus einer vorbestimmten Anzahl an gestapelter Artikel) vollständig ist.

Vorzugsweise weisen in Verbindung mit einer vorbestimmten Anzahl von Artikeln, die eine Artikelstange bilden, die Mitnehmer der Förderer (hier Gruppierradsegmente) einen festen Abstand zueinander auf. Dieser kann jedoch auch in Abhängigkeit von Steuersignalen aus dem Vorprozess (Einzelverpackungsprozess) oder einem nachgeordneten Prozess (Herstellung einer Umverpackung um die Artikelstange aus angestapelten Artikeln oder aus der Gruppierung (Stapelbildung der Artikelstangen) selbst variabel sein, wenn innerhalb des Prozesses Artikelstangen oder -stapel mit einer unterschiedlichen Anzahl von Artikeln gebildet werden sollen.

Vorzugsweise weisen die Gruppierradsegmente zumindest eine Tasche zur Aufnahme eines Stapels von Artikeln auf, vorzugsweise aber diametral am Außenumfang jeweils, vorzugsweise durch Stege mit einer Nabe verbunden, zwei gegenüberliegende Taschen.

Vorzugsweise sind zumindest zwei Gruppierradsegmente vorhanden, höchst vorzugsweise aber drei oder mehr, die alle mit ihren entsprechenden Mitnehmern auf die gleiche Position der Artikelaufnahme von einer vorgeschalteten Zufuhreinrichtung, wie einen Wendekopf, arbeiten, da höchst vorzugsweise die Stangenbildung und Anstapelung der Artikel in einer Tasche eines Gruppierradsegmentes stets in der gleichen Ebene und beginnend an der gleichen Stelle erfolgt.

Insbesondere arbeiten die Taschen der Gruppierradsegmente mit einem ca. einen Viertelkreis bildenden, im ,Querschnitt U-förmigen Produktführungskanal zusammen, in dem die in den Taschen gebildeten Artikelstapel bzw. -stangen in Verbindung mit den Taschen sicher geführt werden bis zu einer Übergabestelle zur Übergabe des Artikelstapels bzw. der Artikelstange aus angestapelten einzelnen Artikeln an eine anschließende Übergabeeinrichtung.

In einer weiteren Ausführungsform der Fördervorrichtung (Gruppiereinrichtung) sind als Förderer anstelle der Gruppierradsegmente des Gruppierrades des ersten Ausführungsbeispiels drei nebeneinander angeordnete, schlaufenförmig umlaufende Riemen, insbesondere Zahnnriemen, vorgesehen, die jeweils mit drei in Förderrichtung gleichmäßig beabstandeten Mitnehmerpaaren aufweisen, wobei die Mitnehmerpaare so ausgerichtet sind, dass sie (auch) fluchtend hintereinander bezüglich einer Oberseite des mittleren der drei Riemen angeordnet sind. Die Riemen, insbesondere Zahnriemen, sind individuell durch ihnen zugeordnete Servomotoren als Antriebseinheiten unabhängig voneinander so ansteuerbar, dass während der erste Riemen mit einem seiner Mitnehmerpaare mit einer Anstapelstation zum Anstapeln mit Artikeln zur Bildung einer Artikelstange im Eingriff steht, der zweite Riemen mit einem seiner Mitnehmerpaare z. B. mit einer Übergabestation zur Übergabe eines Gegenstandes (Artikelstange) im Eingriff ist und/oder der dritte Riemen mit keinem seiner Mitnehmerpaare mit einer der beiden Stationen im Eingriff steht. Die Relativposition der drei Zahnriemen und damit Taschen für die Aufnahme von Artikelstangen aus angestapelten Artikeln ist vollständig flexibel und variabel zueinander. Vorzugsweise befindet sich einer der Riemen (Förderer) stets mit einer Tasche zur Aufnahme (Anstapelung) praktisch in der Anstapelposition zur Bildung einer Artikelstange (sieht man einmal von dem schnellen Wechsel zwischen der Abförderung einer kompletten, fehlerfreien Artikelstange und dem Verbringen einer Tasche zur Aufnahme von Artikeln durch die von Mitnehmern gebildete Tasche des benachbarten Riemens in die Anstapelposition ab. Diese Ausführungsform hat den Vorteil, dass ein Bewegungsablauf der Förderbewegung der Fördervorrichtung mit einer optimalen Durchsatzleistung realisierbar ist, da immer nur einer der Förderer mit der Aufnahme- bzw. Übergabestation (Anstapelposition) im Eingriff steht, während ein Förderer immer frei von jedem Eingriff ist und daher mit erhöhter Geschwindigkeit rotiert bzw. umlaufend bewegt werden kann, um die Mitnehmerpaare der anderen Förderer wieder einzuholen und so unmittelbar anschließend zur Aufnahmestation (Anstapelposition) bzw. Übergabe der Produkte in der Aufnahme- bzw. Übergabestation bereitstehen kann. Leertakte können entsprechend ausgeglichen werden, da auch hier der mit seiner Tasche in der Aufnahmeposition zur Anstapelung einer Artikelstange befindlichen Riemen "warten" kann bis die komplette Stapelbildung aus fehlerfreien Artikeln abgeschlossen ist.

Im übrigen gelten für dieses Ausführungsbeispiel die obigen Erläuterungen hinsichtlich der Gruppierungselemente des ersten Ausführungsbeispiels sinngemäß. Vorzugsweise ist als Übergabeeinrichtung zwischen der Gruppierungseinrichtung und einem nachgeschalteten Längsförderer, der z. B. in Verbindung mit einem Stangenpacker (wie einer Flow-Pack-Maschine) vorgesehen ist, eine Fördereinheit die zwei gegenüberliegende Fördervorrichtungen umfasst, vorgesehen, wobei diese beiden Fördervorrichtungen derart zueinander angeordnet sind, dass die Förderer der beiden Fördervorrichtungen sich jeweils in einem einen Förderspalt bildenden Abstand gegenüberliegen und die Antriebseinheiten der einander gegenüberliegenden Förderer so zueinander synchronisiert sind, dass der zu fördernde Gegenstand jeweils zwischen einander gegenüberliegenden Mitnehmerpaaren der beiden Fördervorrichtungen aufnehmbar und im Förderspalt weiter transportierbar ist. Eine solche Fördereinheit mit einer gepaarten Anordnung von Fördervorrichtungen, deren Geschwindigkeitsprofile aufeinander synchronisiert sind, erlaubt eine besonders zuverlässige Fixierung der zu fördernden Gegenstände im Zwischenraum zwischen den gegenüberliegenden Mitnehmerpaaren der beiden Förderer und somit eine zuverlässige Aufnahme, Förderung und Übergabe von Gegenständen, wie Artikelstangen aus einer Mehrzahl verpackter Einzelartikel insbesondere auch in einer waagerechten Förderrichtung. Vorzugsweise weist jede der Fördervorrichtungen eine Mehrzahl von umlaufenden, separat ansteuerbaren und koaxial angeordneten Transportbändern oder -ketten auf, jeweils mit zunächst einem, vorzugsweise mehreren beabstandeten Mitnehmern oder Mitnehmerpaaren versehen, die in vergleichbarer Weise wie die unabhängigen Elemente (Förderer) der Gruppiereinrichtung unabhängig voneinander mit Artikelstangen angestapelter Artikel in Eingriff bringbar sind.

Bei einer solchen Fördereinheit kann vorteilhafterweise im Förderspalt zusätzlich eine Gleitschiene angeordnet sein, auf der der zu fördernde Gegenstand (Artikelstapel) verschiebbar aufliegt. Die zu fördernden Artikel werden auf der Oberfläche der Gleitschiene abgestützt, so dass die Mitnehmer/Mitnehmerpaare der beiden Fördervorrichtungen lediglich eine parallel zur Gleitschiene ausgerichtete Förderkraft auf die Gegenstände (insbesondere zu Artikelstangen angestapelte Artikel) ausüben müssen.

Die Erfindung wird nachstehend anhand von zwei Ausführungsbeispielen und zugehörigen Zeichnungen näher erläutert. In diesen zeigen:
- Figur 1: eine Gruppiereinrichtung in schematischer perspektivischer Darstellung nach einem ersten Ausführungsbeispiel,
- Figur 2: eine Ansicht der Gruppiereinrichtung nach Figur 1 ohne vorgeschalteten Wendekopf zur Bereitstellung von Einzelartikeln in schematischer perspektivischer Darstellung aus Sicht eines Gruppierrades,
- Figur 3: eine Seitenansicht der Gruppiereinrichtung nach den Figuren 1 und 2,
- Figur 4: eine Einzelheit des Ausführungsbeispieles im Bereich des Gruppierrades für ein intelligentes Anstapeln von Artikeln und deren variabler Abgabe,
- Figur 5: eine vergrößerte Darstellung der Übergabeeinrichtung nach dem vorliegenden ersten Ausführungsbeispiel,
- Figur 6: eine vergrößerte Darstellung des Gruppierrades der Gruppiereinrichtung nach dem vorliegenden ersten Ausführungsbeispiel,
- Figur 7: eine Draufsicht der Gruppiereinrichtung nach dem vorliegenden, ersten Ausführungsbeispiel unter besonderer Berücksichtigung der Übergabeeinrichtung,
- Figur 8: eine schematische Perspektivansicht einer Baugruppe zum Anstapeln und Abgeben von Produktstangen, welche eine Fördervorrichtung und Fördereinheit umfasst, nach einem zweiten Ausführungsbeispiel der Erfindung,
- Figur 9: eine Abfolge (a) bis (c) von Verpackungs- und Gruppierungsschritten in einer Verpackungsmaschine, bei der eine Fördereinrichtung und Fördereinheit zum Einsatz gelangt, nach einem zweiten Ausführungsbeispiel der Erfindung,
- Figur 10: eine perspektivische Darstellung einer Fördervorrichtung mit einer nachgeschalteten, aus zwei Fördervorrichtungen zusammengesetzten Fördereinheit, nach einem zweiten Ausführungsbeispiel der Erfindung,
- Figur 11: Darstellung der Fördervorrichtung aus Figur 10 in einer Gesamtseitenansicht (a) und perspektivische Darstellung (b) eines Details der Fördervorrichtung aus Richtung des Pfeiles (b) in Seitenansicht (a), nach einem zweiten Ausführungsbeispiel der Erfindung,
- Figur 12: Darstellung der Fördervorrichtung aus Figur 10 in einer Gesamtseitenansicht mit verschiedenen Pfeilen zur Verdeutlichung der unterschiedlichen Geschwindigkeiten der Mitnehmerpaare, nach einem zweiten Ausführungsbeispiel der Erfindung,
- Figur 13: ein Fließschema mit dem periodisch wiederkehrenden Bewegungszyklus der Fördervorrichtung aus den Figuren 11 und 12, nach einem zweiten Ausführungsbeispiel der Erfindung,
- Figur 14: eine perspektivische Darstellung der Fördereinheit sowie der vorgeschalteten Fördervorrichtung im Bereich der Produktübergabe an diese Fördereinheit, nach einem zweiten Ausführungsbeispiel der Erfindung, und
- Figur 15: eine Draufsicht auf die Fördereinheit und die Fördervorrichtung gemäß Figur 14, nach einem zweiten Ausführungsbeispiel der Erfindung.

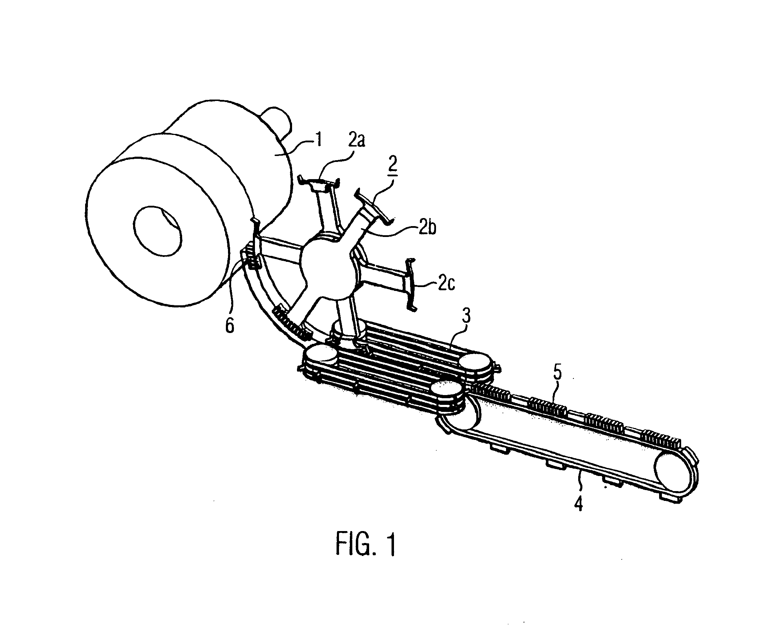

In dem nachfolgend erläuterten ersten Ausführungsbeispiel der Figuren 1 bis 7 haben die verwendeten Bezugszeichen folgende Bedeutung:
- 1: Wendekopf zum Anstapeln der Artikel (Bestandteil der nicht weiter dargestellten Verpackungsmaschine für Einzelverpackung der Artikel);
- 2: Gruppierrad (mit drei unabhängig rotierend antreibbaren Gruppierradsegmenten (Rädern) zur Aufnahme mehrerer Artikel als Stange von vorzugsweise 3 bis 16 Artikel;
- 2.01: Anstapelposition;
- 2.02: Produktführungsband;
- 2.03: Übergabeposition zur Übergabeeinrichtung;
- 2.04: Produktstange (auch Artikelstange);
- 2.11 / 2.21 / 2.31: hinteres / mittleres / vorderes Rad (Gruppierradsegment), jedes separat angetrieben;
- 2.12 / 2.22 / 2.32: Tasche für Produktstange (Artikelstange);
- 3: Übergabeeinrichtung;
- 3.01: Aufnahmeposition für Artikelstangen aus dem Gruppierrad;
- 3.02: Produktführungskanal (Übergabeeinrichtung 3);
- 3.03: Übergabeposition zur nachgelagerten Baugruppe (Mitnehmerkette), wie Stangenpacker;
- 3.04: Produktstange (auch Artikelstange);
- 3.11 / 3.21 / 3.31: obere / mittlere / untere Mitnehmerkette der Übergabeeinrichtung 3;
- 3.12 / 3.22 / 3.32: Mitnehmerpaar der jeweiligen Mitnehmerkette;
- 4: Mitnehmerkette (Zuführung zu oder Bestandteil des nachgeordneten Stangenpackers);

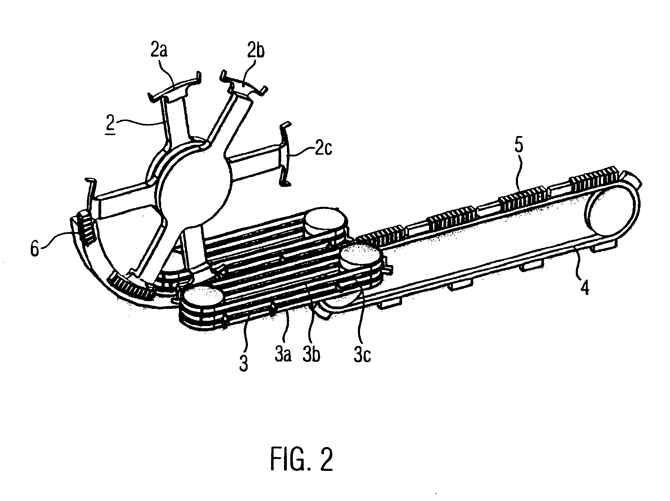

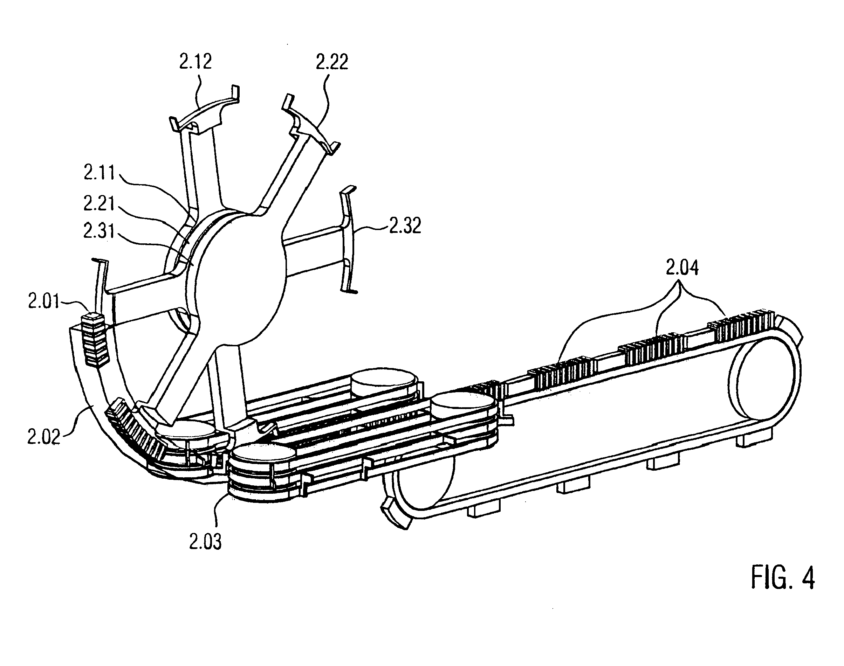

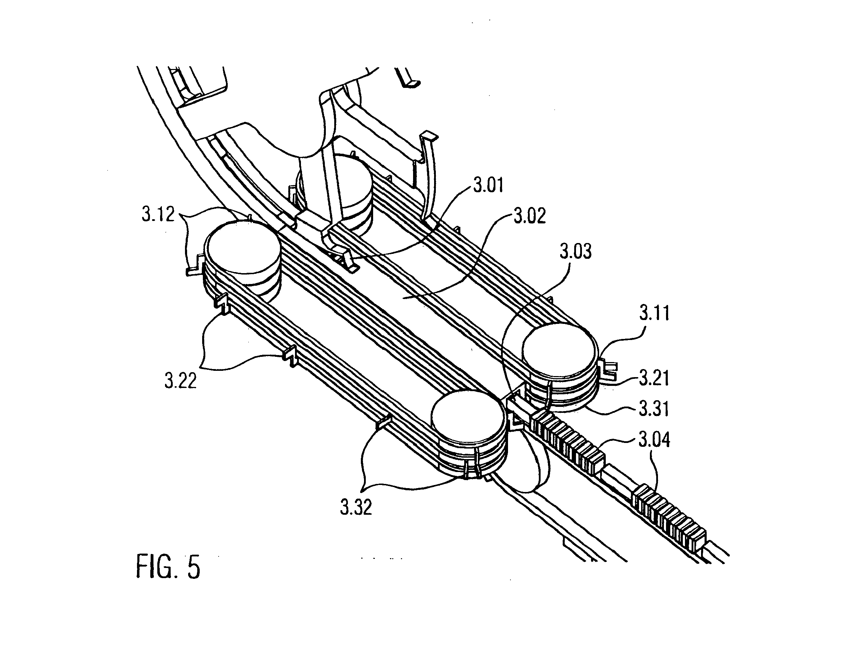

In den Figuren 1 und 2 sind die Räder 2.11, 2.21, 2.31 des Gruppierrades 2 auch mit 2a, 2b und 2c bezeichnet, die obere, mittlere und untere Mitnehmerkette 3.11, 3.21, 3.31 (Figur 5) sind in Figur 2 mit 3a, 3b und 3c bezeichnet. Eine Produkt- oder Artikelstange, 2.04 oder 3.04 (vergleiche Figur 4 und 5 ist in Figur 2 mit 5 bezeichnet und einzelne Artikel sind in Figur 1, 2 und 3 mit 6 bezeichnet.

Das erste Ausführungsbeispiel der Erfindung wird anhand der Figuren 1 bis 7 nachfolgend erläutert. Diese zeigen eine Gruppiereinrichtung zur Bildung von Artikelstangen aus einer Mehrzahl angestapelter einzelner, vorzugsweise vorher einzeln verpackter Artikel 6, die anschließend zu einem Stangenpacker wie z. B. einer Flow-Pack-Maschine bzw. einer einem solchen Stangenpacker zur Ausbildung einer Umverpackung um die Artikelstange dienenden, die Artikelstange zuführenden Längsfördereinrichtung zugeführt werden. Eine Forderung derartiger Stangepacker besteht darin, dass jede Artikelstange nur fehlerfrei, d. h. vollständig einzelverpackte Artikel enthält, was dann, wenn in einer Artikelstange auch unverpackte oder fehlerhafte Artikel zu einer Artikelstange angestapelt sind, dazu führt, dass die gesamte Restartikelstange ebenfalls ausgesondert werden muss.

Das vorliegende Ausführungsbeispiel verdeutlicht ein Verfahren und eine Einrichtung zum "intelligenten Anstapeln" von Artikeln derart, dass eine flexible Verkettung zwischen der vorangehenden Einzelverpackungseinheit, wie einem abschließenden Packkopf, einer kontinuierlichen Verpackungsmaschine, die der Einzelverpackung von Artikeln dient und einem nachgeordneten Stapelpacker vorgesehen ist, derart, dass nicht nur fehlerhafte z. B. unverpackte oder fehlerhaft verpackte Einzelartikel vor einer Stapelbildung ausgesondert werden können, sondern solche Artikel auch nicht zur Stapelbildung verwendet werden. Kernstück einer solchen Einrichtung zur Bildung eines Artikelstapels bzw. einer Artikelstange aus einer Mehrzahl von Artikeln, die insbesondere vorher einzelverpackt sind, ist eine Gruppiereinrichtung wie sie in einem ersten Ausführungsbeispiel nachfolgend anhand der Figuren 1 bis 7 erläutert wird.

Das erste Ausführungsbeispiel sieht für die Ausgestaltung der Gruppiereinrichtung und die Gestaltung des Förderers, in dem die Produkte oder Artikel angestapelt werden, ein Gruppierrad 2 vor, stromab eines Wendekopfes 1 zum Anstapeln der Produkte, wobei sich an das Gruppierrad 2 eine Übergabeeinrichtung 3 anschließt, die eine Artikelstange 3.04 aus angestapelten, verpackten Einzelartikeln 6 in eine Mitnehmerkette 4 übergibt. Das Gruppierrad 2 weist drei koaxiale Gruppierradsegmente oder Räder 2.11, 2.21, 2.31 auf, die in einer gemeinsamen vertikalen Ebene liegende Taschen 2.12, 2.22, 2.32 aufweisen und unabhängig voneinander, insbesondere durch individuell den Rädern 2.11, 2.21, 2.31 zugeordnete Servomotoren zur Rotation um eine gemeinsame Drehachse ansteuerbar sind. Entsprechend ist in diesem Fall auch die abfolgende Übergabeeinrichtung 3 durch zwei gegenüberliegende und sich an den Produktführungskanal 2.02 anschließende und diesen seitlich begrenzende Längsfördereinheiten auf, die jeweils aus drei übereinander über koaxiale Umlenkscheiben 7a, 7b, 7c (jeweils individuell ansteuerbar) umlaufende Förderriemen oder -ketten 3a, 3b, 3c bzw. 3.11, 3.21, 3.31 gebildet sind, an denen jeweils Mitnehmerpaare 3.12, 3.22, 3.32 befestigt sind, die alle in einer vertikalen Mitnehmerebene, die auch durch die Gleitschiene Produktförderweg enthält, angeordnet sind, wobei jedes Mitnehmerpaar eine Tasche zur Aufnahme einer Produkt- oder Artikelstange 5 bzw. 3.04 bildet bzw. aufweist. Ggf. könnten die Mitnehmer auch einzeln zum Angriff am Ende einer Artikelstange 5 bzw. 3.04 aus angestapelten Artikeln 6 angeordnet sein.

Die Gruppiereinrichtung zur Stapelbildung von vorzugsweise verpackten Einzelartikeln schließt sich, wie Figur 1 verdeutlicht, an einen Wendekopf 1 an, der korrekte, einzelverpackte Artikel zu dem Gruppierrad 2 zur Anstapelung einer vorbestimmten Anzahl einzelner, korrekt verpackter Artikel zu einer Artikelstange 5 bzw. 2.04 oder 3.04 zuführt.

Aufgrund von Artikel- oder Verpackungsfehlern für die Einzelverpackung der Artikel kommt es jedoch ggf. zu sogenannten "Leertakten", d. h. der Wendekopf 1 führt in einem bestimmten Takt dem Gruppierrad 2 keinen Artikel zu, da dieser vor Erreichen des Wendekopfes 1 oder von diesem in Verbindung mit einer hier nicht gezeigten Sensoreinrichtung aus dem Prozess ausgeschleust worden ist. Um zu vermeiden, dass die dann gebildete Artikelstange 5 einen Artikel weniger als die vorbestimmte Anzahl aufweist oder führt, erfolgt eine Segmentierung des Greiferrades 2 in drei Greiferradsegmente 2a, 2b, 2c bzw. 2.12., 2.22, 2.32, die jeweils völlig individuell und unabhängig voneinander durch separate Servormotoren ansteuerbar sind. Hierdurch ist es z. B. möglich, dass das in den Figuren 1 bis 7 sich in einer Anstapelposition 2.01 befindende vordere Rad 2.31 in einer Warteposition d. h. taktangepasst an die Bereitstellung eines neuen Einzelartikels durch den Wendekopf 1 anzuhalten, während die übrigen Räder, d. h. das hintere und das mittlere Rad 2.11 bzw. 2.21 weiter individuell angesteuert rotieren und einen entsprechenden Artikelstapel, d. h. eine Produktstange 2.04 bzw. 3.04 (hier auch mit 5 bezeichnet) in die Übergabeeinrichtung 3 überführen oder in einer raschen Rückkehrbewegung zur Bereitstellung einer Tasche 4 bzw. 2.12, 2.22 oder 2.32 in der Anstapelposition 2.01 diese wieder für eine Stapelbildung bereitzustellen.

Auf diese Weise erfolgt durch das Gruppierrad 2 vorzugsweise eine Aufnahme mehrerer Produkte bzw. Einzelartikel als Artikelstange 5 bzw. 2.04 oder 3.04 vorzugsweise in einer Anzahl von drei bis sechzehn Einzelprodukten in einer taktgenauen, flexiblen Zuordnung an die Bereitstellung der Einzelartikel durch einen vorgeschalteten Wendekopf 1 wie auch später eine taktgenaue Zuordnung der aufgenommenen Artikelstangen an eine nachfolgende Verpackungseinheit oder -maschine wie eine Führungs- oder Mitnehmerkette 4 eines Stangenpackers, sodass variable Abstände zwischen den Artikelstangen 5 bzw. 2.04 oder 3.04 im Bereich der Übergabeeinrichtung durch korrespondierende Flexibilisierung der Weiterführung der angestapelten Artikel (Artikelstangen) im Bereich der Übergabeeinrichtung 3 und eine kontinuierliche oder diskontinuierliche Abgabe der Artikelstangen möglich ist, wie nachfolgend noch genauer erläutert wird.

Die Räder 2a, 2b, 2c bzw. 2.11, 2.21, 2.31 des Gruppierrades 2 sind also völlig unabhängig voneinander hinsichtlich ihrer relativen Winkelposition zueinander drehbar und bestehen aus diametral gegenüberliegend sich von einer Nabe 8 aus erstreckenden Stegen 9 an deren Außenumfang die Taschen 2.12, 2.22, 2.32 für die Aufnahme jeweils einer Artikelstange 5 bzw. 2.04 oder 3.04 durch jeweils einen in Umfangsrichtung vorauslaufenden, vorderen und einem nachlaufenden hinteren Mitnehmer 2.10 und 2.20 gebildet sind. Dies haben einen Abstand voneinander, der geringfügig größer ist als die Gesamtlänge einer Artikelstange 5 bzw. 2.04 oder 3.04 aus angestapelten Artikeln.

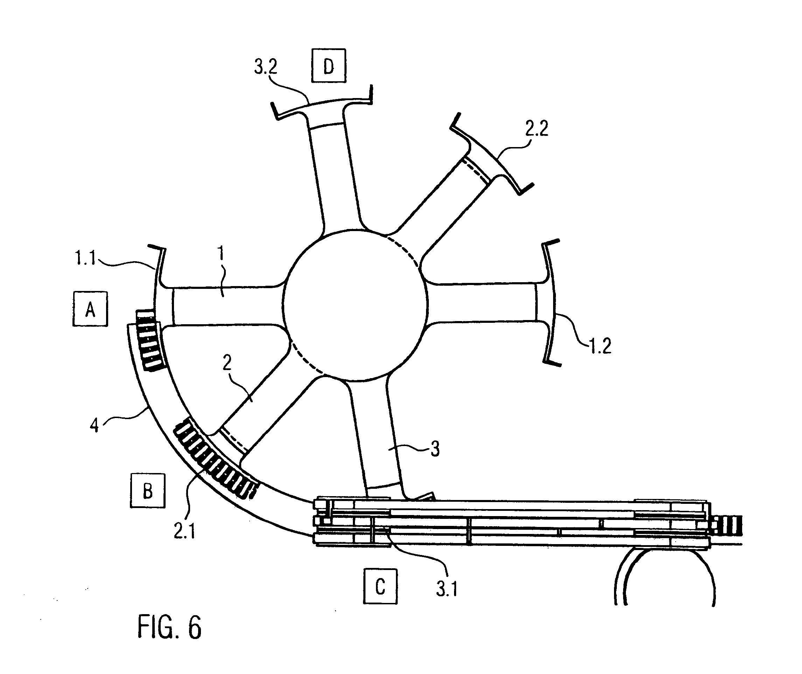

Das in der Aufnahmeposition 2.01 befindliche Rad kann also warten bis die entsprechende Anzahl fehlerfreier, einzelverpackter Artikel 6 in der zugehörigen Tasche 1.1 (vgl. Figur 6) angestapelt ist. Derweil führt das vordere Rad 2b bzw. 2.22 in der zugehörigen Tasche eine Artikelstange 2.04 durch einen im Querschnitt U- oder C-förmigen und in der Art eines Viertelkreisbogens ausgeführten Produktführungskanales 2.02 zur sicheren Produktführung in die Übergabeposition 2.03 und Übergabe der Artikelstange an die Übergabeeinrichtung 3 während das hintere Rad 2.12 rasch zurückläuft, um sogleich nach Komplettierung einer Artikelstange in der Aufnahmeposition 2.01 an diese Stelle zur Aufnahme eines neuen Artikelstapels zu treten.

Auf diese Weise ist ein intelligentes Anstapeln, d. h. die Herstellung vollständiger Artikelstangen mit der immer gleichen, vorbestimmten Artikelanzahl pro Artikelstange auch dann möglich, wenn in Verbindung mit fehlenden Produkten und sogenannten "Leertakten" im vorausgehenden Prozess eine Störung in der Produktzufuhr auftritt. Mit anderen Worten wartet die Gruppierung in Gestalt eines Gruppierradsegmentes in der Aufnahmeposition 2.03 bei Leertakten bis die entsprechende vorbestimmte Anzahl von einzelnen Artikeln angestapelt ist und die Artikelstange 2.04 bzw. 3.04 oder 5 vollständig ist.

Gegebenenfalls können die am Außenumfang der Segmente 2a bis 2c bzw. 2.11, 2.21, 2.31 des Gruppierrades auch mit mehr als einer bzw. zwei (wie hier) Taschen 2.12, 2.22 oder 2.32 versehen sein. Wesentlich ist, dass diese Taschen der unterschiedlichen Gruppierradsegmente 2a bis 2c bzw. 2.11, 2.21, 2.31 stets in die der Artikelstange selbe Stapelposition 2.01 gelangen, d. h. sämtliche Taschen des Gruppierrades in einer vertikalen Ebene (durch entsprechende Kröpfung der Stege) angeordnet sind.

### Zum Gruppierrad 2

Das Gruppierrad 2 ermöglicht eine Entkopplung des Anstapeln einzelner, insbesondere einzeln verpackter Artikel und Produkte zu einer Stangenformation (Artikelstange 5, 2.04, 3.04) von einem vorgeschalteten Einzel-Verpackungsprozess der einzelnen Artikel 6 und das Abgeben dieser so gebildeten, stets vollständigen aus fehlerfreien Artikeln gebildeten Artikelstange an eine nachgelagerte Baugruppe z. B. zur Ausbildung einer Umverpackung in einen Stangenpacker wie z. B. einer Flow-Pack-Maschinen.

Das Anstapeln der einzelnen Artikel in der Anstapelposition 2.01 (Position A) erfolgt in die in dieser Position befindlichen Tasche 2.32 (die in Fig. 6 mit 1.1 bezeichnet ist). Diese Tasche 1.1 wird durch zwei Mitnehmer mit konstantem Abstand zueinander bildet.

Selbstverständlich sind die separat angetriebenen Räder 2.11., 2.21, 2.31 jeweils auch in Bezug auf die Größe der Taschen 2.12, 2.22 bzw. 2.32 austauschbar in Abhängigkeit von der jeweiligen Anzahl von Artikeln, die zu einer Stange gestapelt werden.

Obwohl hier nicht im Einzelnen dargestellt, sind vorzugsweise die Nabenabschnitte der Gruppierradsegmente oder Räder 2.11, 2.21, 2.31 bzw. 2a, 2b, 2c auf je einer separat angetriebenen Welle, die insbesondere ein Zahnprofil aufweist oder mit einem solchen verbunden ist, das mit einem Zahnriemen in Eingriff ist, angeordnet, vorzugsweise sind die Wellen zumindest teilweise als Hohlwellen ausgebildet und koaxial zur Rotation um eine (starre) Achse angeordnet, die die Drehachse der Gruppierradsegemente bzw. Räder 2a bis 2c bzw. 2.11, 2.21 oder 2.31 des Gruppierrades 2 bildet.

Vorzugsweise sind die Taschen der Räder 2.11, 2.21, 2.31 bzw. 2a bis 2c durch zwei Mitnehmer mit vorzugweise konstantem Abstand zueinander gebildet. Das mittlere Rad 2.32 bewegt sich dabei synchronisiert zur stromauf angeordneten Abgabeeinheit der vorgeschalteten Einzelverpackungsmaschine, d. h. dem Wendekopf 1. Die zweite, gegenüberliegende Tasche in Fig. 6 mit 1.2 bezeichnet, des mittleren Rades 2.32 ist zu dieser Zeit leer und ohne Funktion.

Zum gleichen Zeitpunkt transportiert das vordere Rad 2.22 die in einer Tasche, die in Fig. 6 mit 2.1 bezeichnet ist, gebildete Artikelstange 2.04, entlang des Produktführungskanales 2.02, der an seiner Oberseite geschlitzt ist und insgesamt im Querschnitt ein C- oder U-förmiges Profil aufweist und der in der Art eines Viertelkreisbogens ausgeführt ist entlang eines Weges B von der Stapelposition 2.01 bzw. Position 2a zur Übergabeposition C, d. h. zur Übergabeposition 2.03 zu der anschließenden Übergabeeinrichtung 3.

Aufgrund des C- oder U-förmig profilierten Produktführungskanales 2.02 zur Produktführung ist die gebildete und in der zugehörigen Tasche des Rades 2.22 geführte Artikelstange 2.04 dabei allseitig durch die stationäre Produktführung gegen Ausbrechen gesichert. Die zweite Tasche des vorderen Gruppierradsegmentes bzw. Rades 2.22 bzw. 2b, in Fig. 6 mit 2.2 bezeichnet, ist zu dieser Zeit leer und ohne Funktion. Das hintere Gruppierradsegment 2.12 gibt die gebildete Artikelstange mit der in Fig. 6 mit 3.1 bezeichneten Tasche an die nachfolgend angeordnete, zu einer nachgeschalteten Verpackungseinheit wie einem Stangenpacker angeordneten Längsfördereinrichtung 4 ab und ist auf diese synchronisiert. Diese Längsfördereinrichtung 4 besitzt Mitnehmer 4a, die hinter die zugeführte Produktstange 3.04 greifen und fest mit der Mitnehmerkette 4 verbunden sind.

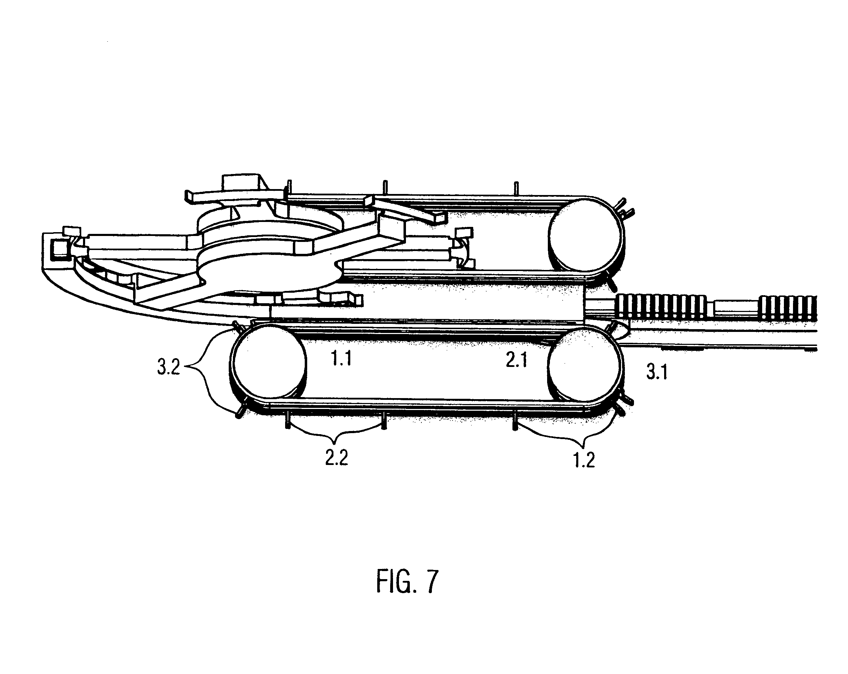

Auf diese Weise werden die gebildeten Artikelstangen 3.04 taktsynchronisiert dem nachfolgenden Stangenpacker, wie z. B. eine Flow-Pack-Maschine zugeführt. Das hintere Rad, in Fig. 6 mit 3 bezeichnet übergibt die Artikelstange 3.04, die sich in der in Fig. 6 mit 3.01 bezeichneten Tasche 3.1 befindet an die Übergabeeinrichtung 3 und ist auf diese synchronisiert. Nach der Übergabe bewegt sich das in Fig. 6 mit 3 bezeichnete hintere Gruppierradsegment bzw. -rad 2.11 weiter, so dass die gegenüberliegende (leere) Tasche 3.2 des Rades 2 die in Fig. 6 mit 1.1 bezeichnete Tasche 1.1 des mittleren Gruppierradsegementes bzw. Rades, in Fig. 6 mit 1 bezeichnet, einholt und benachbart zu dieser angeordnet ist (beide Taschen 1.1 und 3.2 befinden sich (wie alle Taschen des Gruppierrades 3) durch unterschiedliche Kröpfung in der gleichen vertikalen Bewegungsebene (siehe auch Fig. 7), da die Anstapelposition am Beginn des gebogenen Übergabekanales, der in Fig. 6 mit 4 bezeichnet ist, jeweils die gleiche Position aufweist.

Nachdem die in Fig. 6 in der Anstapelposition A befindliche Tasche 1.1 des Fig. 6 mit 1 bezeichneten Rades vollständig entsprechend der vorbestimmten Anzahl von Einzelartikeln zur Bildung einer Artikelstange gefüllt ist, kann nach unmittelbarer Bewegung der entsprechenden Tasche 3.2 in die Anstapelposition A in diese die Abnahme verpackter Artikel von dem vorgestalteten Wendekopf und das Anstapeln in der dann in der Anstapelposition A befindlichen Tasche 3.2 (Fig. 6) erfolgen.

Die in Fig. 6 mit 1.1 bezeichnete Tasche des Greifersegmentes bzw. Rades 1, die dann einen vollständigen Artikelstapel (=Artikelstange) enthält, bewegt sich dann durch den im Querschnitt C- oder U-förmigen Produktführungskanal, in Fig. 6 mit 4 bezeichnet, während die Artikelstange 3.04 in der Tasche 2.1 des vorderen Greiferradsegementes bzw. Rades, in Fig. 6 mit 2 bezeichnet, die Artikelstange in der Übergabeposition C an die Übergabeeinrichtung 3, d. h. die Förderer mit den gegenüberliegenden in gleicherweise wie das Gruppierrad 2 segmentierten, jeweils unabhängig antreibbaren Ketten oder Förderriemen 3.11, 3.21 bzw. 3.31 abgibt und anschließend die Tasche 2.2 des vorderen Rades in Fig. 4 mit 2 bezeichnet, hinter der in der Anstapelposition A befindlichen Tasche 3.2 des hinteren Rades bzw. Greiferradsegementes 2.11 wartet.

Dieser Zyklus wiederholt sich als wechselnd für alle Taschen (in Fig. 6 mit 1.1, 1.2, 2.1, 2.2 und 3.1 bzw. 3.2 bezeichnet).

Die Entkopplung des Anstapeln der Artikel in die Taschen zur Bildung einer kompletten Artikelstange von der vorgeschalteten Abgabebewegung eines Wendekopfes 1 (Fig. 1) allgemeiner einer vorgeschalteten Verpackungsmaschine zur Einzelverpackung von zu Artikelstangen zu verpackenden Produkten), ermöglicht das Warten der in der Anstapelposition zu füllenden Taschen im Falle eines Leertaktes in der vorgeschalteten Verpackungsmaschine zur Einzelverpackung der Artikel. Die Übergabe der Artikelstangen an die Übergabeeinrichtung 3 kann trotz Warten in der Anstapelposition ungehindert durchgeführt werden (=intelligentes Anstapeln).

Um die Abgabe der angestapelten Artikelstange an die Übergabeeinrichtung 3 stets im gleichen Zeitfenster zu realisieren, wird das Warten im Falle eines Leertakes (kein Artikel) durch ein Vorfahren, d. h. eine Bewegung des jeweiligen Rades bzw. Greiferradsegmentes mit einer fertigen Artikelstange zwischen der Anstapelposition A und der Übergabeposition C und den Übergabeförderer 3 durch eine Bewegung entlang des Produktführungskanals 4 mit erhöhter Geschwindigkeit ausglichen.

Eine perspektivische Draufsicht der Übergabeeinrichtung 3 mit zugeordnetem Gruppierrad 1 ist nochmals in Fig. 7 gezeigt, wobei die jeweils auf drei separat antreibbaren Förderern (Ketten oder Riemen 3.11, 3.21, 3.31 mit jeweiligen Mitnehmerpaaren 3.12, 3.22, 3.32 bestehenden, beidseitig des Förderkanales der Artikelstangen duplizierten Übergabeeinrichtung 3 ist in Fig. 7 nochmals gezeigt. Die Funktionsweise der Übergabeeinrichtung 3 entspricht analog derjenigen des Gruppierrades 1. Alle Mitnehmer 3.12, 3.22, 3.32 der Mitnehmerketten 3.11, 3.21, 3.31 (alle Ketten arbeiten unabhängig mit separat und individuell ansteuerbarem Servomotoren, wobei jeweils die auf beiden Seiten in einer gleichen Horizontalebene angeordneten Ketten oder Riemen miteinander antriebsmäßig gekoppelt sind, so dass Mitnehmer von beiden Seiten das Vorschieben des entsprechenden Artikelstapels entlang einer Gleitschiene im Förderkanal bewirken. Die Übergabeeinrichtung 3 ist in diesem Ausführungsbeispiel dreizügig, d. h. mit jeweils drei Ketten auf jeder Seite ausgeführt.

Mindestens zwei Räder (im Beispiel drei Räder, 2.11, 2,21, 2.31) oder Gruppiersegmente sind auf einer Drehachse angeordnet. Jedes Rad 2a, 2b, 2c bzw. 2.11, 2.21, 2.31 besitzt einen eigenen Antrieb (Servomotor) und kann so unabhängig rotierend bewegt werden. Darüber hinaus besitzt jedes Rad mindestens eine Tasche konstanter Länge (im Ausführungsbeispiel jeweils zwei Taschen, 2.12, 2.22, 2.32) mit einem im Umlaufrichtung vorderen und einem hinteren Mitnehmer. Zwischen den Mitnehmern kann eine Anzahl von Produkten angeordnet und gefördert werden. Es ist jedoch auch möglich die Aufnahmekapazität der Taschen vorzugsweise sensorgesteuert variabel auszubilden, falls das zur Flexibilisierung des Anstapel- und Gruppierprozesses sinnvoll erscheint.

Das Anstapeln der Produkte zu einer Stange erfolgt in Position 2.01. Über eine Produktführung (2.02) werden die Produktstangen (2.04) zwischen den Mitnehmern einer Tasche zur Übergabestelle (2.03) gefördert. Die Taschen 2.12, 2.22, 2.32 der einzelnen Räder 2.11, 2.21, 2.31 (auch mit 2a, 2b, 2c bezeichnet (siehe 1. Fig. 2)) sind so gestaltet, dass sie sich in ein und derselben Ebene bewegen.

### Zur Übergabeeinrichtung 3

Die Übergabeeinrichtung 3 besteht aus zwei opponierend angeordneten Fördervorrichtungen 21, 22, die derart opponierend zueinander angeordnet sind, dass die Einzelförderer (im vorliegenden Ausführungsbeispiel 3) Riemen oder Ketten 3.11, 3.21, 3.31 der beiden Fördervorrichtungen 21, 22 sich jeweils beiderseits eines Förderpfades oder -spaltes, in dem sich die Artikelstangen 2.04 bzw. 3.04 bewegen, angeordnet sind, wobei die Einzelförderer jeweils miteinander auch hinsichtlich der Position ihrer durch die Mitnehmer 3.12, 3.22, 3.32 gebildeten Taschen miteinander korrespondieren, sodass jeweils zwei gegenüberliegende Mitnehmer der in der gleichen Ebene liegenden Ketten oder Riemen 3.11, 3.21, 3.31 die Artikelstange entlang einer Gleitschiene 3.02 (Produktführung) in Richtung der anschließenden Mitnehmerkette 4 einer nachgeordneten Verpackungsmaschine (Stangenpacker) schieben. Diese Mitnehmerkette 4 besitzt permanente Abstandshalter 4a zur Beabstandung der einzelnen Artikelstangen 3.04.

Mindestens zwei Ketten/Riemen (im ersten Ausführungsbeispiel drei Ketten, 3.11, 3.21, 3.31) sind praktisch deckungsgleich übereinander angeordnet. Jede Kette besitzt einen eigenen Antrieb durch einen individuell steuerbaren Servomotor und kann so unabhängig bewegt werden. Darüber hinaus besitzt jede Kette 3.11, 3.21, 3.31 mindestens eine Tasche 3.12, 3.22, 3.32 konstanter Länge (im Ausführungsbeispiel jeweils zwei Taschen, gebildet zwischen einem vorderen und einem hinteren Mitnehmer 3.12, 3.22, 3.32. Zwischen den Mitnehmern kann eine Anzahl von Produkten angeordnet und gefördert werden.

Das Aufnehmen der Produktstange erfolgt in der Position 3.01. Über eine Produktführung (3.02) werden die Produktstangen (3.04) zwischen den Mitnehmern einer Tasche zur Übergabestelle (3.03) gefördert. Die Taschen der einzelnen Ketten 3.11, 3.21, 3.31 sind so gestaltet, dass sie sich in ein und derselben Ebene bewegen.

Auf diese Weise können variable Abstände (oder auch konstante Abstände) zwischen den Artikelstangen 3.04 und eine in Bezug auf eine Folgemaschine (Mitnehmerkette 4) synchronisierte Übergabe der Artikelstange 3.04 erfolgen.

### Zur Funktionsweise

### Das Gruppierrad 2

Die Funktionsweise der Gruppiereinrichtung wird anhand von Fig. 6 und 7 erläutert. Das Gruppierrad ermöglicht eine Entkoppelung des Anstapels einzelner Produkte zu einer Stangenformation von einem vorgeschalteten Einzelverpackungsprozess und das Abgegeben dieser Artikelstange an eine nachgelagerte Baugruppe z. B. zur Bildung einer Umverpackung in einen Stangenpacker.

Das Anstapeln der Artikel (Pos. A) erfolgt gemäß Fig. 6 / Fig. 7 in die Tasche 1.1 des mittleren Rades 2.21. Diese Tasche 1.1 wird durch zwei Mitnehmer mit konstantem Abstand zueinander gebildet. Das Rad 1 bewegt sich dabei synchronisiert zur davor angeordneten Verpackungseinheit "Wendekopf". Die zweite Tasche 1.2 des Rades 1 ist zu dieser Zeit leer und ohne Funktion.

Das Rad 2 transportiert die Stangenformation (Artikelstange) in der Tasche 2.1 entlang des Weges B von der Anstapelposition (A) zur Übergabeposition (C). Die Stangenformation ist dabei allseitig durch den feststehenden Produktführungskanal gegen Ausbrechen gesichert. Die zweite Tasche 2.2 ist zu dieser Zeit leer und ohne Funktion.

Das Rad 3 gibt die Stangenformation (Artikelstange) mit der Tasche 3.1 an die nachfolgend angeordnete Einheit ab und ist auf diese synchronisiert. Nach der Abgabe bewegt sich Rad 3 weiter, so dass die gegenüber liegende Tasche 3.2 die Tasche 1.1 des Rades 1 einholt. Nachdem die Tasche 1.1 vollständig gefüllt ist, kann sofort weiter in die wartende Tasche 3.2 eingestapelt werden.

Tasche 1.1 fährt dann vor während Tasche 2.1 abgibt und anschließend Tasche 2.2 hinter der Tasche 3.2 wartet. Dieser Zyklus wiederholt sich wechselnd für alle Taschen.

Die Funktionsweise der Übergabeeinrichtung 3 in ihrer jeweils dreigliedrigen (dreizügigen) Ausführung der drei unabhängig voneinander angetriebenen oberen, mittleren und unteren Mitnehmerkette 3.11, 3.21, 3.31, die jeweils zu beiden Seiten des Transportweges der Artikelstangen angeordnet sind, wobei die Förderer (Riemen oder Mitnehmerketten der gleichen Horizontalebene jeweils zusammenarbeiten ist analog zu derjenigen des Gruppierrades.

In anderen Ausführungsbeispielen kann die Übergabeeinrichtung z. B. auch nur zweizügig ausgeführt sein (d. h. mit zwei unabhängig bewegbaren Mitnehmerketten oder -riemen, vorzugsweise zu beiden Seiten des Transportweges.

Ggf. kann die Übergabeeinrichtung 3 auch nur an einer Seite des Transportweges zur Übergabe von Artikelstangen an eine nachgeordnete Längsfördereinrichtung wie eine Mitnehmerkette 3 (vgl. Fig. 1 bis 3) vorgesehen sein.

In Fig. 7 übernimmt die Tasche 1.1 der mittleren Mitnehmerkette 3.21 (vgl. auch mittlere Mitnehmerkette 3c in Fig. 2 bzw. mittlere Mitnehmerkette 3.21 in der Darstellung nach Fig. 7) die von dem hinteren Gruppierradsegment 2.11 an die Übergabeeinrichtung 3 abgegebene Artikelstange, während die Tasche 2.1 des vorderen Greiferradsegementes bzw. Rades 2.31 bzw. in Fig. 6 mit 2 bezeichnet nach vorn bewegt wird und die vorherige Artikelstange bestehend aus angestapelten Einzelartikeln kontinuierlich oder diskontinuierlich an die nachfolgende Längsfördereinrichtung 4 (Mitnehmerkette) übergibt. Die in Fig. 7 mit 3.1 bezeichnete Tasche der oberen Mitnehmerkette 3.11 der Übergabeeinrichtung 3 hat die Artikelstange bereits an den nachgeordneten Längsförderer 4 abgegeben, so dass die Tasche 3.2 des gleichen oberen Förderers bzw. der oberen Mitnehmerkette 3.11 bis hinter die Tasche 1.1 verfahren kann (vgl. Fig. 7 und dort auf die Übernahme der nächsten Artikelstange aus dem Gruppierrad 2 wartet).

Auf diese Weise ist eine einerseits flexibilisierte andererseits synchronisiert taktgenau auf die vorausliegende Einzelartikel-Verpackungseinrichtung bzw. in nachfolgenden Stangenpackern arbeitende Gruppiereinrichtung oder Stapelbilder geschaffen, bei dem andererseits verhindert ist, dass fehlerhafte Artikel zur Bildung eines Artikelstapels verwendet werden oder bei Auftreten von Leertakten eine unvollständige Stapelbildung erfolgt. Vielmehr kann die Gruppiereinrichtung wie ein Teil (Förderer) eines Gruppierrades in der Anstapelposition warten, bis eine vollständige Anzahl fehlerfreier bzw. einzelverpackter Artikel zu einer kompletten Artikelstange angestapelt ist, ehe eine Übergabe und Zuführung zu einem nachgeordnetem Stapelpacker erfolgt. Zugleich kann aber der Transport vorausliegender Artikelstangen zu dem Stangepacker ungehindert erfolgen. Die einzelnen Greiferradsegmente bzw. Räder des Greiferrades führen jeweils nicht nur durch ihre permanente Richtungsänderung sondern auch hinsichtlich ihres Betrages beschleunigte Bewegungen aus, so dass Wartezeiten für den Anstapelprozess durch parallel-Förderorgane des Gruppierrades und entsprechend raschere beschleunigte Bewegungen zwischen einer Anstapelposition und einer Übergabeposition an einen Übergabeförderer ausgeglichen werden.

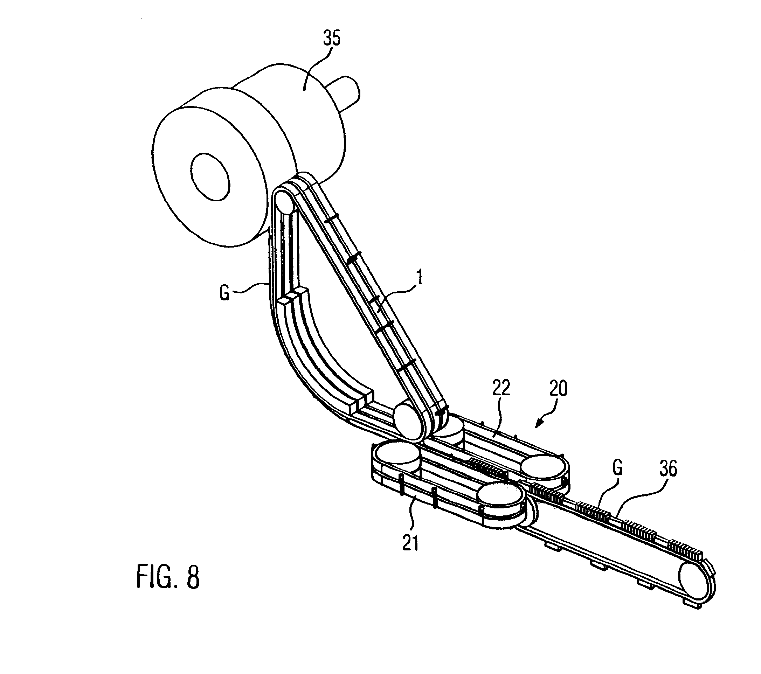

Die Erfindung wird nachstehend auch anhand eines zweiten Ausführungsbeispieles, das in den Figuren 8 bis 15 dargestellt ist, erläutert.

In Figur 8 ist eine Baugruppe dargestellt, mit der Einzelprodukte P zu Produktstangen G aufgestapelt und diese Produktstangen G dann weiteren Verarbeitungsschritten, z. B. einer Neuverpackung durch einen Stangenpacker zugeführt werden. Eine solche Baugruppe kann insbesondere in eine Verpackungsmaschine integriert sein, um in einem Zwischenschritt die bereits verpackten Einzelprodukte P zu Stangen G anzustapeln und diese Produktstangen G dann an eine Endverpackungseinheit zu übergeben, wo die Produktstangen G nochmals mit einer äußeren Zweitverpackung versehen werden, z. B. im Rahmen einer Folw-Pack-Maschine.

Sowohl bei Figur 8 als auch bei den übrigen Figuren handelt es sich jeweils um stark vereinfachte Prinzipdarstellungen, bei denen zur besseren Verständlichkeit die übrigen Maschinenteile, an denen die dargestellten Komponenten befestigt sind, weggelassen wurden.

Gemäß Figur 8 umfasst eine Baugruppe zum Anstapeln und Abgeben von Produktstangen G zunächst einen Wendekopf 35, der ein Bestandteil der Verpackungsmaschine zur Herstellung der Einzelverpackung ist. Durch Rotation des Wendekopfes 35 werden die einzelverpackten Produkte P an eine nachgelagerte Fördervorrichtung 1 übergeben, indem die Produkte P bei der Produktübergabe zu einer Produktstange G angestapelt werden.

Hierzu weist die Fördervorrichtung 1 mehrere Mitnehmerpaare 2, 3, 4, 5, 6, 7, 8, 9, 10 auf, die an der Außenseite von angetriebenen Riemen 1 a, 1 b, 1 c befestigt sind und zwischen denen die vom Wendekopf 35 abgegebenen Einzelprodukte P zunächst unter Bildung von Produktstangen G eingestapelt und dann weitergefördert werden. Der Abstand zwischen den Mitnehmern eines Mitnehmerpaares 2, 3, 4, 5, 6, 7, 8, 9, 10 dient somit als Aufnahmebereich, um mehrere (in der Regel zwischen 3 bis 16) als Stange G aufeinander gestapelte Einzelprodukte P aufzunehmen und an die nachfolgenden Komponenten der Verpackungsmaschine weiterzuführen.

Im in Figur 8 dargestellten Ausführungsbeispiel handelt es sich bei dieser nachgelagerten Komponente um eine Fördereinheit 20, die wiederum aus zwei sich horizontal gegenüberliegenden Fördervorrichtungen 21, 22 besteht. Diese Fördereinheit 20 nimmt die Produktstangen G von der vorgelagerten Fördervorrichtung 1 auf und ordnet diese Produktstangen G wiederum taktgenau einem weiteren nachfolgenden Maschinenteil zu.

Das nachfolgende Maschinenteil ist in Form einer vorzugsweise, kontinuierlich umlaufenden Mitnehmerkette 36 ausgebildet. Am Außenumfang der Mitnehmerkette 36 sind gleichmäßig beabstandete Abstandshalter 37 vorgesehen, zwischen denen die von der Fördereinheit 20 übernommenen Produktstangen G aufgenommen werden. Diese Mitnehmerkette 36 bildet bereits einen Bestandteil der nachfolgenden Verpackungsmaschine zur Herstellung der Stangenverpackung, so dass durch die Fördervorrichtung 1 und die Fördereinheit 20 ein kontinuierlicher Produkttransfer von der Verpackungsmaschine für Einzelverpackung auf die Verpackungsmaschine für Stangenverpackung realisiert wird, indem zunächst Stangen G von aus dem Einzelverpackungssystem entnommenen Produkten P angestapelt und diese Stangen G an das Stangenverpackungssystem weitergefördert werden.

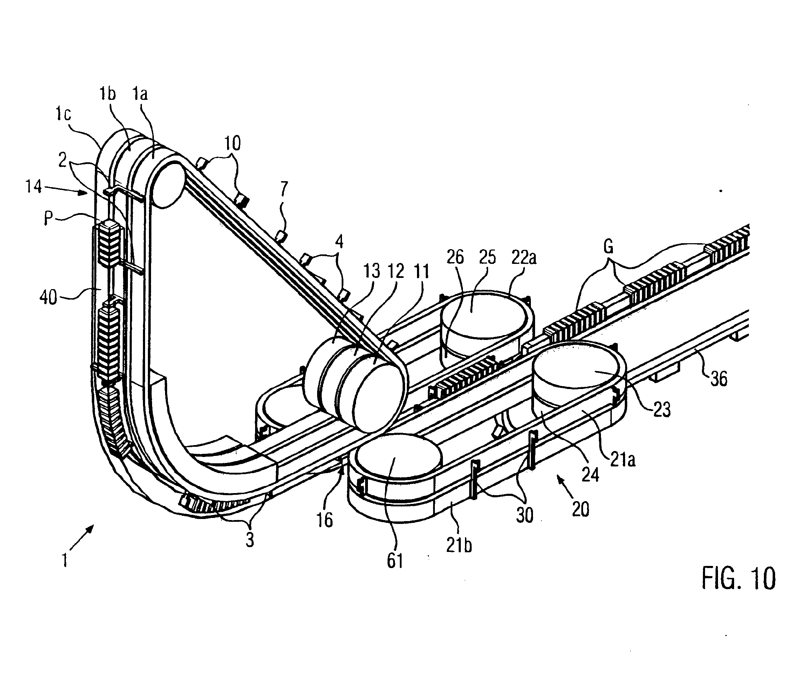

Die Fördervorrichtung 1 und die Fördereinheit 20, die den vorgeschilderten Transfer der Produktstangen G bewerkstelligen, sind in den weiteren Figuren 10 bis 15 im Einzelnen nochmals näher dargestellt und werden auch im weiteren Verlauf der Beschreibung dieses weiteren Ausführungsbeispiels detailliert beschrieben.

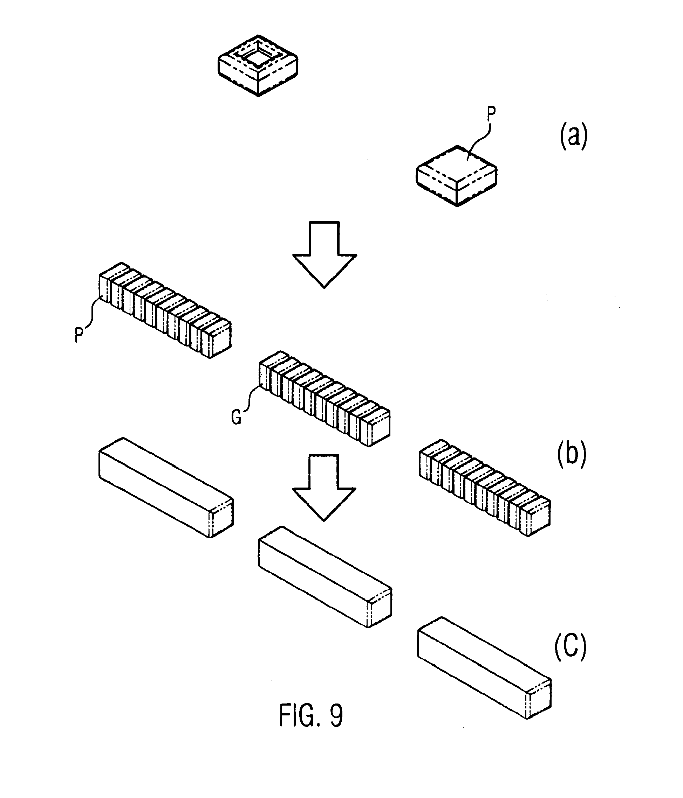

Die Figur 9 verdeutlicht anhand der drei Ablaufschritte (a) bis (c), in denen zusammenfassend die am Produkt vollzogenen Verpackungs- und Gruppierungsschritte dargestellt sind, die räumlich-funktionelle Einordnung der erfindungsgemäß beanspruchten Fördervorrichtung 1 im Rahmen des Gesamtverpackungsprozesses. Diese Figur gilt ganz genauso für das vorerläuterte erste Ausführungsbeispiel.

In einem ersten Verpackungsschritt (a) wird in einer Einzelverpackungsmaschine das Einzelprodukt in bekannter Weise verpackt. Dieser Verpackungsschritt (a) geht der Fördervorrichtung 1 gemäß Figur 8 voraus und lediglich der Wendekopf 35 der Einzelverpackungsmaschine, der die verpackten Einzelprodukte P an die Fördervorrichtung 1 übergibt, ist in Figur 1 in schematischer Form dargestellt.

Bei den einzeln zu verpackenden Produkten kann es sich generell um Stückartikel handeln, die in großen Mengen anfallen, wobei die erfindungsgemäße Fördervorrichtung 1 insbesondere bei kleinstückigen Süßwarenartikeln, wie Bonbons, Pralinen und ähnlichem, zum Einsatz gelangt, welche an kontinuierlich arbeitenden Hochleistungs-, Form-, Schneide- und Verpackungsmaschinen einzeln gefertigt und anschließend in beliebiger Faltung (Dreheinschlag, Falteinschlag, Seitenfaltung...) verpackt werden. Das verpackte Einzelprodukt P, wie es am Ende des ersten Ablaufschrittes (a) in Figur 9 erhalten wird, bildet schließlich das Eingangsprodukt für die darauffolgende Stapelung, Gruppierung und Weiterförderung, welche durch die erfindungsgemäße Fördervorrichtung 1 realisiert wird.

Die durch die Fördervorrichtung 1 erfüllte Funktion der Stapelung und Gruppierung der verpackten Einzelprodukte P wird in Figur 9 durch den Ablaufschritt (b) veranschaulicht. Die Stapelung und Gruppierung der verpackten Einzelprodukte P stellt im Ablauf des Verpackungsprozesses einen durchsatzbegrenzenden "Flaschenhals" dar, da für diesen Schritt (b) eine Synchronisation und somit Drosselung der Fördergeschwindigkeit der Fördervorrichtung 1 auf die Einstapelgeschwindigkeit notwendig ist. Nur durch diese Synchronisation (Geschwindigkeitsangleichung) wird eine zuverlässige Bildung von Produktstangen G, die aus mehreren, im dargestellten Ausführungsbeispiel aus zehn verpackten Einzelprodukten P bestehen, gewährleistet, ohne dass dabei Fehl- oder Leerstellen gebildet werden.

Im Ablaufschritt (b) sind die Produktstangen G in gleichmäßigen Abständen zueinander dargestellt worden, wobei jedoch die Fördervorrichtung 1, erlaubt, diese Abstände zwischen den einzelnen Produktstangen G variabel einzustellen. Die Herstellung variabler Abstände zwischen den Produktstangen G gestattet eine kontinuierliche oder intermittierende Abgabe der Produktstangen G an die nachgelagerte Verpackungsmaschine zur Stangenverpackung, ohne dass diese wegen einer fehlenden Versorgung mit kompletten, fehlerfreien Produktstangen G stillstehen oder unproduktive Leertakte ausführen muss.

Die Herstellung variabler Abstände zwischen den Produktstangen G erlaubt zudem ein "intelligentes" Anstapeln der Einzelprodukte P in der Fördervorrichtung 1. "Intelligent" bedeutet in diesem Zusammenhang, dass immer nur vollständige Produktstangen G, das heißt immer nur Produktstangen G mit der gleichen Anzahl an Einzelprodukten P pro Produktstange G in der Fördervorrichtung 1 angestapelt werden, und zwar auch, wenn die der Fördervorrichtung 1 vorausgehende Verpackungsmaschine für Einzelverpackung Leertakte ausführt, z.B. wenn ein fehlerhafter oder fehlerhaft verpackter Artikel vorher eingeschleust. In diesem Fall wartet nämlich der der Anstapelung von Einzelprodukten P dienende Aufnahmebereich der Fördervorrichtung 1 so lange, bis die vorausgehende Verpackungsmaschine wieder funktionstüchtig ist und keine Leertakte mehr produziert, so dass die nächste Produktstange G im Aufnahmebereich der Fördervorrichtung 1 wieder vollständig angestapelt werden kann.

Im Ablaufschritt (c) der Figur 9 wird schließlich die Funktion der sich gemäß Figur 1 an die Fördervorrichtung 1 und Fördereinheit 20 anschließenden Verpackungsmaschine für die Stangenverpackung (Stangenverpacker) veranschaulicht, wobei in Figur 10 von dieser Endverpackungsmaschine nur eine zuführende Mitnehmerkette 36 dargestellt ist. Ein Stangenverpacker schließt sich an die Fördervorrichtung 1 und Fördereinheit 20 an und bildet den finalen Ablaufschritt des Gesamtverpackungsprozesses. Das Verpacken der Produktstangen G kann ebenfalls in bekannten, kontinuierlich arbeitenden Hochleistungs-Verpackungsanlagen erfolgen, bei denen die Produktstangen G in beliebiger Lageanordnung (z.B. Flach- oder Hochkant) in ein weiteres Packmittel verpackt werden. Diese Zweitverpackung kann ebenfalls je nach Einsatzgebiet durch Falteinschlag, als "Schicht gegen Schicht"-Siegelung (FinSeal) oder als Schlauchbeutel (FlowPack) gebildet werden.

Das Ausführungsbeispiel zeigt die zwischen der vorgelagerten Verpackungsmaschine für Einzelverpackung und der nachgelagerten Verpackungsmaschine für Stangenverpackung eingefügte Fördervorrichtung 1 und Fördereinheit 20, in Perspektivansicht in Figur 10, schematisch. An einer Aufnahmestation 14 werden die verpackten Einzelprodukte P an die Fördervorrichtung 1 übergeben, wobei die Einzelprodukte P hierzu in Form einer zunächst vertikal ausgerichteten Produktstange G zwischen ein Mitnehmerpaar 2 der Fördervorrichtung 1 aufeinander gestapelt werden. Die Einzelprodukte P werden hierzu nacheinander unter Bildung eines Produktstapels G auf den unteren Mitnehmer des sich langsam weiter nach unten absenkenden Mitnehmerpaares 2 aufgelegt, wobei ein entlang der Fördervorrichtung 1 verlaufender Führungskanal 40 eine vierseitige Führung der angestapelten Produktstangen G ermöglicht, so dass die sich unsichtbar innerhalb des Führungskanals 40 fortbewegenden Mitnehmerpaare 2, 5, 8, 3, 6 lediglich eine schiebende Förderbewegung auf die Produktstangen G ausüben, während der Führungskanal 40 verhindert, dass die Produktstangen G aus der Fördervorrichtung 1 fallen.

Die Fördervorrichtung 1 übergibt schließlich an einer am Ende des Führungskanals 40 gelegenen Übergabestation 16 die Produktstangen G an eine Fördereinheit 20. In Figur 10 sind die Produktstangen G im Verlauf ihrer entlang der Fördervorrichtung 1 zurückgelegten Förderstrecke, d.h. im Abschnitt von der vertikalen Aufnahmeposition 14 zur horizontalen Übergabeposition 16, nicht sichtbar, da sie allseitig von dem L-förmig gebogenen Führungskanal 40 umschlossen sind, und erst in der horizontalen Fördereinheit 20 nach ihrem Austritt aus dem Führungskanal 40 sind die angestapelten Produktstangen G zu erkennen.

Die Fördervorrichtung 1 besteht in diesem weiteren Ausführungsbeispiel aus drei parallel nebeneinander angeordneten, in nahezu dreieckförmiger Gestalt schlaufenförmig umlaufenden Zahnriemen 1 a, 1 b, 1 c, nämlich aus einem ersten, dem Betrachter zugewandten, vorderen Zahnriemen 1 a, einem zweiten, mittleren Zahnriemen 1 b und einem dritten, dem Betrachter abgewandten, hinteren Zahnriemen 1 c. Jeder der drei Zahnriemen 1 a, 1 b, 1 c ist mit drei in Riemenumlaufrichtung gleichmäßig beabstandeten Mitnehmerpaaren verbunden, so dass die Fördervorrichtung 1 insgesamt neun Mitnehmerpaare 2, 3, 4, 5, 6, 7, 8, 9, 10 umfasst, die wiederkehrend durch den Führungskanal 40 hindurchgeführt werden, um am Eingang des Führungskanals 40 die Einzelprodukte P unter Bildung eines Produktstapels G aufzunehmen und am Ausgang des Führungskanals 40 die aufgenommenen Produktstapel G wieder zur Übergabe an die Fördereinheit 20 freizugeben.

Die drei Zahnriemen 1 a, 1 b, 1 c sind jeweils über drei Umlenkpunkte geführt, wobei einer dieser Umlenkpunkte, welcher der Übergabestation 16 an die Fördereinheit 20 gegenüberliegt, durch die drei Antriebseinheiten der Zahnriemen 1 a, 1 b, 1 c gebildet wird, und wobei jeder Zahnriemen 1 a, 1 b, 1 c separat von einem unabhängig steuerbaren Servomotor 11, 12, 13 angetrieben wird. Der im oberen Eckbereich der dreieckförmigen Endlosschlaufe der Fördervorrichtung 1 gelegene Umlenkpunkt ist durch drei parallel nebeneinander angeordnete Umlenkrollen 41, 42, 43 realisiert, wobei jeder Zahnriemen 1 a, 1 b, 1 c über seine eigene Umlenkrolle 41, 42, 43 geführt ist.

Schließlich wird der dritte Umlenkpunkt im linken unteren Eckbereich der Fördervorrichtung 1 durch drei bogenförmig gestalte Gleitschiene 51, 52, 53 gebildet, über die sich jeweils ein Zahnriemen 1 a, 1 b, 1 c bewegt, wobei der an diesem Eckbereich außen umlaufende Führungskanal 40 in seinem Biegeradius weitgehend dem Biegeradius dieser Gleitschienen 51, 52, 53 entspricht.

Dadurch, dass die drei endlos umlaufenden Zahnriemen 1 a, 1 b, 1 c jeweils mit ihrer eigenen als Servomotor ausgebildeten Antriebseinheit 11, 12, 13 versehen sind, können die auf den drei Zahnriemen 1a, 1b, 1c befestigten Mitnehmerpaare 2, 3, 4, 5, 6, 7, 8, 9, 10 unabhängig voneinander bewegt werden. Dieser unabhängige Antrieb der drei Zahnriemen 1 a, 1 b, 1 c mittels drei unabhängig voneinander ansteuerbarer Servomotoren 11, 12, 13 erlaubt es somit, die Mitnehmerpaare 2, 3, 4, 5, 6, 7, 8, 9, 10 der drei Zahnriemen 1 a, 1 b, 1 c relativ zueinander zu verfahren, d.h. die parallel zur Förderrichtung gelegenen Abstände zwischen den Mitnehmerpaaren unterschiedlicher Zahnriemen 1 a, 1 b, 1 c können unterschiedlich gewählt werden und während eines Förderzyklus können diese Abstände sogar je nach Position der Mitnehmerpaare variabel eingestellt werden.

Diese variable Einstellung der Abstände zwischen den Mitnehmerpaaren 2, 3, 4, 5, 6, 7, 8, 9, 10 verschiedener Zahnriemen 1a, 1b, 1c wird dadurch ermöglicht, dass die Riemenumlaufgeschwindigkeit des jeweiligen Zahnriemens 1 a, 1 b, 1 c je nach Eingriffssituation der darauf befestigten Mitnehmerpaare unterschiedlich eingestellt ist, wobei die Geschwindigkeit eines Zahnriemens 1a, 1b, 1c während eines vollständigen Umlaufs mehrfach wechseln kann, d.h. der Zahnriemen 1 a, 1 b, 1c wird periodisch wiederkehrend beschleunigt, abgebremst, wieder beschleunigt usw.

Werden an der Aufnahmeposition 14 zwischen den Mitnehmern eines Mitnehmerpaares 2 eine Anzahl Einzelprodukte P nacheinander als Produktstange G angeordnet, so muss während dieses Einstapelvorganges die Umlaufgeschwindigkeit des Zahnriemens 1 a auf eine Geschwindigkeit gedrosselt sein, die der Geschwindigkeit dieses Einstapelvorganges entspricht.

In Figur 10 muss die Fördergeschwindigkeit des ersten, vorderen Zahnriemens 1 a auf eine solche, mit der vorgelagerten Verpackungsmaschine synchrone Anstapelgeschwindigkeit reduziert werden, wobei sich die übrigen beiden Mitnehmerpaare 3, 4 dieses ersten Zahnriemens 1 a zwangsläufig ebenfalls nur mit dieser reduzierten, synchronisierten Geschwindigkeit fortbewegen, da die drei Mitnehmerpaare 2, 3, 4 auf dem jeweiligen Zahnriemen 1 a jeweils fest und gleichmäßig beabstandet zueinander angeordnet sind.

In der in Figur 10 dargestellten Situation muss der erste, vordere Zahnriemen 1 a so lange eine reduzierte, auf den Anstapelprozess synchronisierte Geschwindigkeit beibehalten, bis das Anstapeln der Einzelprodukte P zur vollständigen Produktstange G an der Aufnahmestation 14 abgeschlossen ist, d.h. bis der obere Mitnehmer des mit der Aufnahmestation 14 in Eingriff stehenden Mitnehmerpaares 2 das obere, offene Stirnende des Führungskanales 40 erreicht hat. Sobald der obere Mitnehmer des Mitnehmerpaares 2 ebenfalls nach unten in den produktführenden Kanal 40 abgetaucht ist und somit eine vollständige Produktstange G zwischen dem Mitnehmerpaar 2 eingefügt ist, kann der Zahnriemen 1 a wieder über den zugeordneten Servoantrieb 11 auf eine erhöhte Fördergeschwindigkeit beschleunigt werden.

Der Führungskanal 40 ist so gestaltet, dass er sich in seiner Breitenabmessung nur über den mittleren der drei Zahnriemen 1 b erstreckt und demzufolge müssen auch die Mitnehmerpaare 2, 3, 4, 5, 6, 7, 8, 9, 10 der drei nebeneinander angeordneten Zahnriemen 1 a, 1 b, 1 c so geformt sein, dass sie ebenfalls jeweils oberhalb des mittleren der drei Zahnriemen 1 b angeordnet sind, um jeweils durch die obere Stirnöffnung in den Führungskanal 40 zur Aufnahme und Weiterförderung der Produktstapel G eindringen zu können.

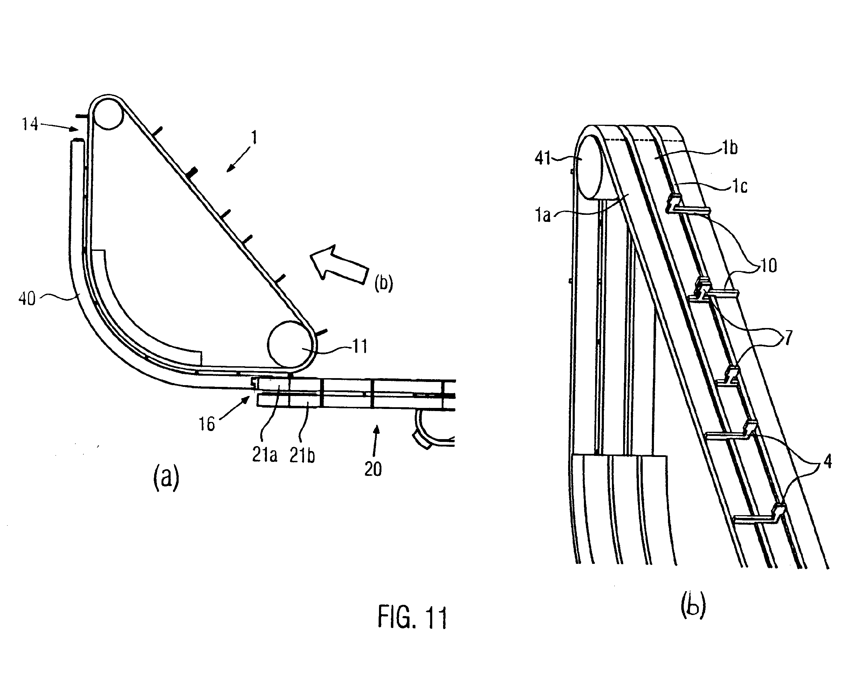

Diese vorteilhafte Gestaltung der Mitnehmer wird im folgenden anhand der Figur 11 (b) näher erläutert, welche eine perspektivische Detailansicht auf den oberen Umlenkbereich der Fördervorrichtung 1 entsprechend einer Ansicht in Richtung des Pfeiles "(b)" aus Figur 11 (a) enthält. Die Mitnehmerpaare 4, 7, 10 der drei verschiedenen Zahnriemen 1 a, 1 b, 1 c sind jeweils deckungsgleich in einer Flucht hintereinander angeordnet. Dazu sind die Mitnehmerpaare 4, 10 des ersten, vorderen und des dritten, hinteren Zahnriemens 1 a, 1 c jeweils L-förmig so weit verlängert, dass sie jeweils bis oberhalb des mittleren Zahnriemens 1b reichen, um die zwischen den Mitnehmerpaaren 4, 7, 10 einzufügenden Produktstangen G unabhängig vom jeweils aktiven Zahnriemen 1 a, 1 b, 1 c entlang einer gemeinsamen, oberhalb des mittleren Zahnriemens 1 b gelegenen Förderlinie transportieren zu können.

In den Figuren 10 bis 12 ist das Ausführungsbeispiel einer Fördervorrichtung 1 mit drei parallelen Zahnriemen 1 a, 1 b, 1 c dargestellt, wobei jedoch die Zahl der Zahnriemen 1 a, 1 b, 1 c auch variieren kann, solange gewährleistet bleibt, dass sich zumindest zwei Mitnehmerpaare relativ zueinander verfahren lassen, um den Abstand zwischen ihnen variabel an den jeweils geforderten Arbeitsablauf anpassen zu können. Daher sind jedoch immer zumindest zwei, unabhängig voneinander antreibbare Zahnriemen erforderlich, die jeweils mit zumindest einem, den zu fördernden Gegenstand aufnehmenden Mitnehmerpaar ausgestattet sind. Auch muss die Übertragung der Förderbewegung von den Antriebseinheiten 11, 12, 13 auf die Mitnehmerpaare 2, 3, 4, 5, 6, 7, 8, 9, 10 nicht unbedingt, wie in den dargestellten Ausführungsbeispielen gezeigt, unter Zuhilfenahme von Zahnriemen 1 a, 1 b, 1 c erfolgen, sondern es sind auch andere konstruktive Ausführungen von Förderern denkbar, wie zum Beispiel bewegte Ketten, rotierende Scheiben, rotierende Räder etc.

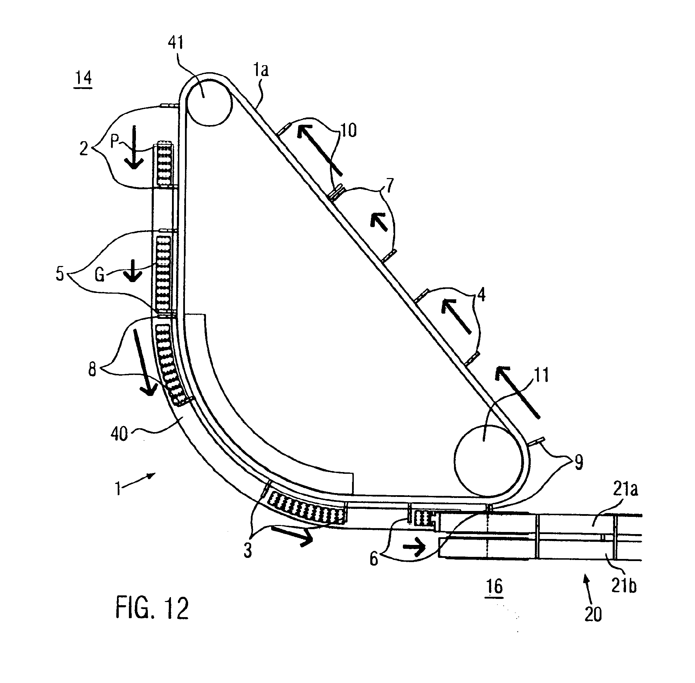

Die Funktionsweise der Fördervorrichtung 1 wird nun nochmals eingehend unter Bezugnahme auf die Seitenansicht gemäß Figur 12 erläutert, wobei die schematisch eingezeichneten Pfeile in dieser Zeichnung die drei unterschiedlichen Geschwindigkeitsstufen symbolisieren sollen, mit der sich die jeweils daneben angeordneten Mitnehmerpaare 2, 3, 4, 5, 6, 7, 8, 9, 10 in Förderrichtung fortbewegen.

An einer Aufnahmestation 14 wird zwischen das Mitnehmerpaar 2 des ersten Zahnriemens 1 a eine Produktstange G angestapelt. An einer Übergabestation 16 werden die Produktstangen G aus dem Mitnehmerpaar 6 eines zweiten Förderriemens 1 b entnommen und an eine nachfolgende Fördereinheit 20 übergeben. Nach Produktabgabe werden die geleerten Mitnehmerpaare 9, 4, 7, 10 aus der Übergabestation 16 heraus entlang der schräg ansteigenden Flanke der Fördervorrichtung 1 zurück zur Aufnahmestation 14 geführt, damit dort zwischen dem als "Aufnahmetasche" dienenden Mitnehmerpaar 9, 4, 7, 10 wieder eine neue Produktstange G eingestapelt werden kann.

Durch die dreisträngige Ausführung der Fördervorrichtung 1 wird es ermöglicht, dass das an der Aufnahmestation 14 erfolgende Aufnehmen (Anstapeln) der Produktstange G weitgehend unabhängig von dem an der Übergabestation 16 erfolgenden Abgeben der Produktstange G stattfindet, da die Mitnehmerpaare 2, 6 die mit diesen beiden Stationen 14, 16 im Eingriff stehen, unterschiedlichen Zahnriemen 1 a, 1 b zugeordnet sind.

In der Figur 12 sind die unterschiedlichen Geschwindigkeiten der drei einzelnen Zahnriemen 1a, 1b, 1c und der jeweils damit verbundenen Mitnehmerpaare 2, 3, 4, 5, 6, 7, 8, 9, 10 durch Pfeile verdeutlicht, wobei die punktiert dargestellten Pfeile symbolisch für eine niedrige Geschwindigkeitsstufe, die durchgezogenen, kurzen Pfeile symbolisch für eine mittlere Geschwindigkeitsstufe und die durchgezogenen, langen Pfeile symbolisch für eine hohe Geschwindigkeitsstufe stehen.

Die mit den punktieren Pfeilen versehenen Mitnehmerpaare 2, 3, 4 sind mit dem ersten Zahnriemen 1 a verbunden (vgl. Figur 10), der von seinem zugehörigen Antrieb 11 lediglich mit einer geringen, konstanten Geschwindigkeit beaufschlagt wird. Der erste Zahnriemen 1a wird deshalb nur mit einer geringen Geschwindigkeit fortbewegt, weil sich eines seiner Mitnehmerpaare 2 gerade an der Aufnahmestation 14 befindet und daher dieses Mitnehmerpaar 2 in seiner vertikal nach unten gerichteten Förderbewegung genau auf den vorher angeordneten "Anstapelkopf" (Wendekopf 35) der Einzelverpackungsmaschine synchronisiert sein muss, um das Anstapeln innerhalb dieses Mitnehmerpaares 2 fehlerfrei zu realisieren. Die beiden übrigen Mitnehmerpaare 3, 4 des Zahnriemens 1a befinden sich zwar nicht im Eingriff mit der Aufnahme- oder Übergabestation 14, 16, jedoch folgt ihre Geschwindigkeit derjenigen des Zahnriemens 1, die von der Anstapelgeschwindigkeit bestimmt wird.

Der zweite, mittlere Zahnriemen 1 b bewegt sich indes mit einer mittleren, konstanten Geschwindigkeit (kurzer durchgezogener Pfeil), die dadurch bestimmt wird, dass eines seiner Mitnehmerpaare 6 gerade die Übergabestation 16 an der unteren, rechten Umlenkung der Fördervorrichtung 1 erreicht hat. Um eine durchgehend störungsfreie Übergabe der Produktstange G von der Fördervorrichtung 1 auf die nachgelagerte Fördereinheit 20 zu erreichen, muss der zweite, mittlere Riemen 16 mit einer Geschwindigkeit umlaufen, die an die Riemenumlaufgeschwindigkeit der nachgelagerten Fördereinheit 20 angeglichen (synchronisiert) ist.

Auch hier sind die beiden weiteren Mitnehmerpaare 5, 7 des zweiten Zahnriemens 1 b zwar außer Eingriff mit Aufnahme- oder Übergabestation 14, 16, wobei jedoch ihre Geschwindigkeit der mittleren Geschwindigkeit des mit der Übergabestation 16 im Eingriff befindlichen Mitnehmerpaares 6 entspricht, da die drei Mitnehmerpaare 5, 6, 7 auf einem gemeinsamen Zahnriemen 1 b befestigt sind.

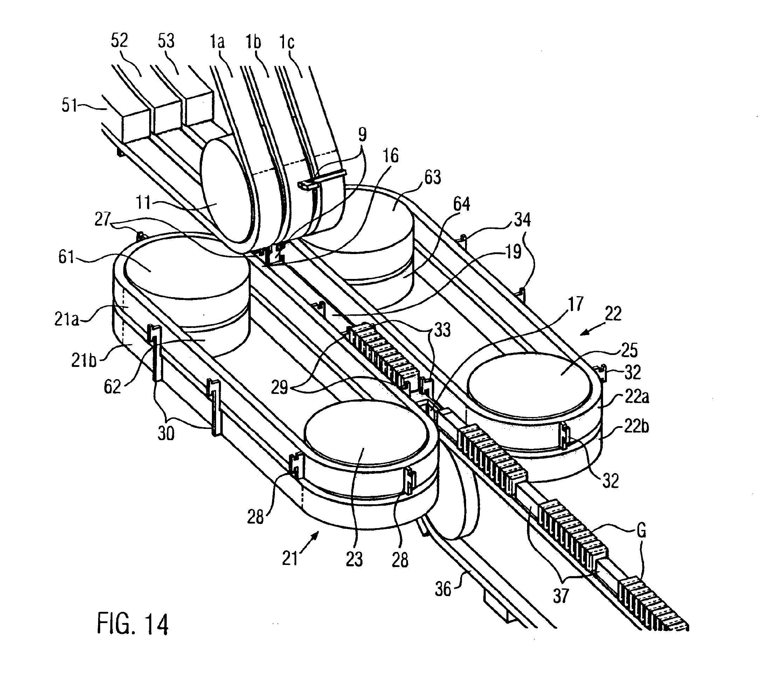

Der dritte, hintere Zahnriemen 1c (vgl. auch Figur 14) verlässt hingegen mit einem seiner Mitnehmerpaare 9 gerade die am rechten unteren Umlenkpunkt gelegene Übergabestation 16. Das Mitnehmerpaar 9 ist somit geleert und führt keine Produktstange G mehr mit sich. Auch die beiden weiteren Mitnehmerpaare 8, 10 des dritten Zahnriemens 1 c befinden sich weder mit der Aufnahme- noch mit der Übergabestation 14, 16 im Eingriff, so dass diese drei Mitnehmerpaare 8, 9, 10 und der zugehörige dritte Zahnriemen 1 c mit einer von angrenzenden Baugruppen unbeeinflussten Geschwindigkeit bewegt werden können. Der dritte Zahnriemen 1 c wird dabei von der entsprechenden Antriebeseinheit 13 so beschleunigt, dass das noch an der schräg hochlaufenden Flanke der Fördervorrichtung 1 befindliche Mitnehmerpaar 10 mit hoher Geschwindigkeit (symbolisiert durch langen durchgezogenen Pfeil) das noch mit der Aufnahmestation 14 im Eingriff stehende Mitnehmerpaar 2 des ersten Zahnriemens 1 a einholt, so dass dieses auf hohe Geschwindigkeit beschleunigte Mitnehmerpaar 10 das vorauseilende, sich mit niedriger Geschwindigkeit fortbewegende Mitnehmerpaar 2 des ersten Zahnriemens 1a einholt, und zwar noch bevor dieses mit einer vollständigen Produktstange G aufgefüllt worden ist.

Nachdem das Mitnehmerpaar 10 des dritten Zahnriemens 1 c das vorauseilende Mitnehmerpaar 2 des ersten Zahnriemens 1 a eingeholt hat, folgt der dritte Zahnriemen 1 c dem Bewegungsprofil des ersten Zahnriemen 1a, das heißt die Geschwindigkeit des dritten Zahnriemens 1 c wird auf die mit der Aufnahmestation 14 synchronisierte Geschwindigkeit des ersten Zahnriemens 1 a abgebremst. Somit kann, nachdem das Mitnehmerpaar 2 des ersten Zahnriemens 1a vollständig mit Produkten P aufgefüllt worden ist, sofort im Anschluss das Mitnehmerpaar 10 des dritten Zahnriemens 1 c durch Anstapeln der Einzelprodukte P gefüllt werden, ohne dass die vorgelagerte Einzelverpackungsmaschine auf das nächste Mitnehmerpaar 10 der Fördervorrichtung 1 warten muss, wodurch eine kontinuierliche Abführung der verpackten Einzelprodukte P aus der Einzelverpackungsmaschine gewährleistet wird.

Gleiches gilt auch für die Übergabe von Produktstangen G an der Übergabestation 16, da hier das Mitnehmerpaar 6 des zweiten, mittleren Zahnriemens 1 b noch vor dem Verlassen der Übergabestation 16 von dem nachfolgenden Mitnehmerpaar 3 des ersten Zahnriemens 1 a eingeholt werden wird, so dass auch eine kontinuierliche Produktabgabe über die Übergabestation 14 an die Fördereinheit 20 und die daran anschließende Stangenverpackungsmaschine gewährleistet wird.

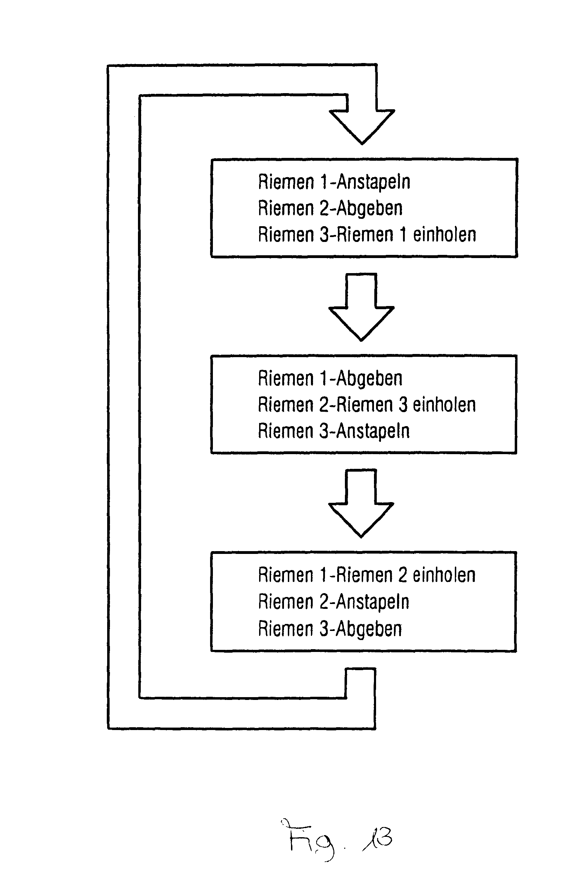

In der Figur 13 sind in Form eines Ablaufdiagrammes die periodisch wiederkehrenden Prozessschritte in einer erfindungsgemäßen Fördervorrichtung 1 gemäß den Figuren 10 bis 12 dargestellt. Der erste Prozessschritt entspricht der Ausgangssituation, wie sie sich in der Figur 12 darstellt und wie sie in den vorangehenden Abschnitten erläutert wurde, während in dem daran anschließenden Prozessschritt ein Mitnehmerpaar 3 des ersten Zahnriemens 1a mit der Übergabestation 16 im Eingriff steht, ein Mitnehmerpaar 10 des dritten Zahnriemens 1 c mit der Aufnahmestation 14 im Eingriff steht und der zweite Zahnriemen 1 b auf die höchste Geschwindigkeitsstufe beschleunigt wird, damit sein entleertes Mitnehmerpaar 7 das Mitnehmerpaar 10 des dritten Zahnriemens 1 c an der Aufnahmestation 14 einholt.

In einem dritten Prozessschritt schließlich wird ein Mitnehmerpaar 8 des dritten Zahnriemens 1c mit der Übergabestation 16 zur Abgabe der Produktstange G in Eingriff gebracht, während ein Mitnehmerpaar 7 des zweiten Zahnriemens 1b mit der Aufnahmestation 14 zum Einstapeln einer neuen Produktstange G im Eingriff steht und ein entleertes Mitnehmerpaar 4 des ersten Zahnriemens 1 a auf eine hohe Geschwindigkeit beschleunigt wird, um das in der Aufnahmestation 14 befindliche Mitnehmerpaar 7 des zweiten Zahnriemens 1 b einzuholen.

Der in der Fördervorrichtung 1 ablaufende Bewegungszyklus beginnt anschließend wieder von vorne mit dem ersten Prozessschritt, wie er in Figur 11 dargestellt ist, wobei an einem solchen Bewegungszyklus der Fördervorrichtung 1 insbesondere von Vorteil ist, dass die Bewegung des Riemens 1 a, der mit der Aufnahmestation 14 zum Anstapeln von Produkten P in Eingriff steht, von der Bewegung des Riemens 1 b, der mit der Übergabestation 16 zur Abgabe von Produktstangen G im Eingriff steht, vollständig entkoppelt ist, so dass es möglich ist, mit dem zu füllenden Mitnehmerpaar 2 so lange in der Aufnahmestation 14 zu warten, bis das Mitnehmerpaar 2 komplett und somit fehlerfrei gefüllt ist (= "intelligentes" Anstapeln).

Ein solches Warten kann zum Beispiel bei einem Leertakt in der vorgelagerten Einzelverpackungsmaschine notwendig werden, wobei trotz dieses Wartens des Mitnehmerpaares 2 an der Aufnahmestation 14 die Abgabe von Produktstangen G an die nachgelagerte Fördereinheit 20 ungehindert durchgeführt werden kann, da die an der Aufnahme- und Übergabestation 14, 16 befindlichen Mitnehmerpaare 2, 6 auf unterschiedlichen, unabhängig voneinander antreibbaren Zahnriemen 1 a, 1 b befestigt sind.

Die Fördervorrichtung 1 stellt somit ein begrenztes Zwischenpuffer zur Verfügung, um Störungen in den vor- oder in den nachgelagerten Baugruppen (Verpackungsmaschinen) zumindest zeitweise kompensieren zu können, ohne dass die jeweils andere Baugruppe von diesen Störungen negativ beeinflusst wird.

In Figur 14 ist in einer perspektivischen Gesamtdarstellung die Fördereinheit 20 dargestellt, an welche die Produktstangen G von der vorgelagerten Fördervorrichtung 1 abgegeben werden, wobei die Fördereinheit 20 ihrerseits die übernommen Produktstangen G an eine nachgelagerte Mitnehmerkette 36, die bereits einen Bestandteil der Stangenverpackungsmaschine bildet, übergibt.

An einer Aufnahmestation 16 werden die Produktstangen G aus dem Mitnehmerpaar 6 der vorgelagerten Fördervorrichtung 1 entnommen, um von zwei einander gegenüberliegenden Mitnehmerpaaren 27, 31 der Fördereinheit 20 weitergefördert zu werden. Die Fördereinheit 20 setzt sich wiederum aus zwei einander gegenüberliegenden, durch einen Förderspalt 18 voneinander getrennten Fördervorrichtungen 21, 22 zusammen, die sich von der vorgelagerten Fördervorrichtung 1 gemäß den Figuren 10 bis 12 lediglich in der Anzahl ihrer Riemen 21 a, 21 b, 22a, 22b, Mitnehmerpaare 27, 28, 29, 30, 31, 32, 33, 34 und Umlenkpunkte unterscheiden, aber sonst auf dem gleichen Funktionsprinzip beruhen. In dem Förderspalt 18 zwischen den beiden Fördervorrichtungen 21, 22 der Fördereinheit 20 ist zusätzlich eine Gleitschiene 19 angeordnet, auf der die von der Fördervorrichtung 1 übernommenen Produktstangen G abgelegt werden, um sie dann mit den einander gegenüberliegenden Mitnehmerpaaren 29, 33 der Fördereinheit 20 in horizontaler Richtung schiebend weiterzubewegen.

An einer Übergabestation 17 werden die Produktstangen G schließlich von der Gleitschiene 19 der Fördereinheit 20 auf die Mitnehmerkette 36 einer nachgelagerten Verpackungsmaschine geschoben, wobei in hier nicht dargestellten, weiteren Baugruppen dieser Verpackungsmaschine die Produktstangen G außen mit einer Zweitverpackung versehen werden.

Die Produktstangen G setzen sich aus zehn verpackten Einzelprodukten P zusammen, die in der Fördereinheit 20 vertikal von der Gleitschiene 19 abgestützt und horizontal vorne und hinten zwischen den Mitnehmerpaaren 29, 33 der einander gegenüberliegenden Fördervorrichtungen 21, 22 gehalten sind. Diese beiden Fördervorrichtungen 21, 22 der Fördereinheit 20 bestehen jeweils aus zwei parallel zueinander verlaufenden, vertikal übereinander angeordneten Zahnriemen 21 a, 21 b, 22a, 22b und zwar aus einem ersten Zahnriemen 21 a, 22a, der in einer Ebene oberhalb der Gleitschiene 19 positioniert ist, und einem zweiten Zahnriemen 21 b, 22b, der in einer Ebene unterhalb der Gleitschiene 19 positioniert ist. Auf jedem Zahnriemen 21a, 21b, 22a, 22b sind zwei Mitnehmerpaare 27, 28, 29, 30, 31, 32, 33, 34 befestigt, die die Bewegung des Zahnriemens 21 a, 21 b, 22a, 22b auf die Produktstangen G übertragen und gleichmäßig entlang der Länge des Riemens 21a, 21 b, 22a, 22b voneinander beabstandet sind.

Die Zahnriemen 21a, 21b, 22a, 22b durchlaufen jeweils eine endlose Schleife und sind über zwei Umlenkpunkte geführt. Der erste Umlenkpunkt ist durch eine Umlenkrolle 61, 62, 63, 64 gebildet, während der zweite Umlenkpunkt von einem Antriebsritzel, beispielsweise dem Antriebsritzel einer servomotorischen Antriebseinheit 23, 24, 25, 26 gebildet ist, wobei der Zahnriemen 21 a, 21 b, 22a, 22b um die Umlenkrolle 61, 62, 63, 64 bzw. um das Antriebsritzel 23, 24, 25, 26 jeweils mit einem Umschlingungswinkel von 180° geführt ist.

In analoger Weise zu der vorgelagerten Fördervorrichtung 1 gemäß den Figuren 10 bis 12 sind auch die endlos umlaufenden Zahnriemen 21 a, 21 b, 22a, 22b der die Fördereinheit 20 bildenden Fördervorrichtungen 21, 22 mit einer jeweils eigenen Antriebseinheit 23, 24, 25, 26 ausgestattet. Als Antrieb dient bevorzugt ein Servomotor 23, 24, 25, 26, so dass die insgesamt vier Zahnriemen 21 a, 21 b, 22a, 22b der Fördereinheit 20 (je zwei Zahnriemen pro Fördervorrichtung 21, 22) und die auf diesen Zahnriemen 21 a, 21 b, 22a, 22b jeweils befestigten zwei Mitnehmerpaare 27, 28, 29, 30, 31, 32, 33, 34 unabhängig voneinander bewegt werden können.

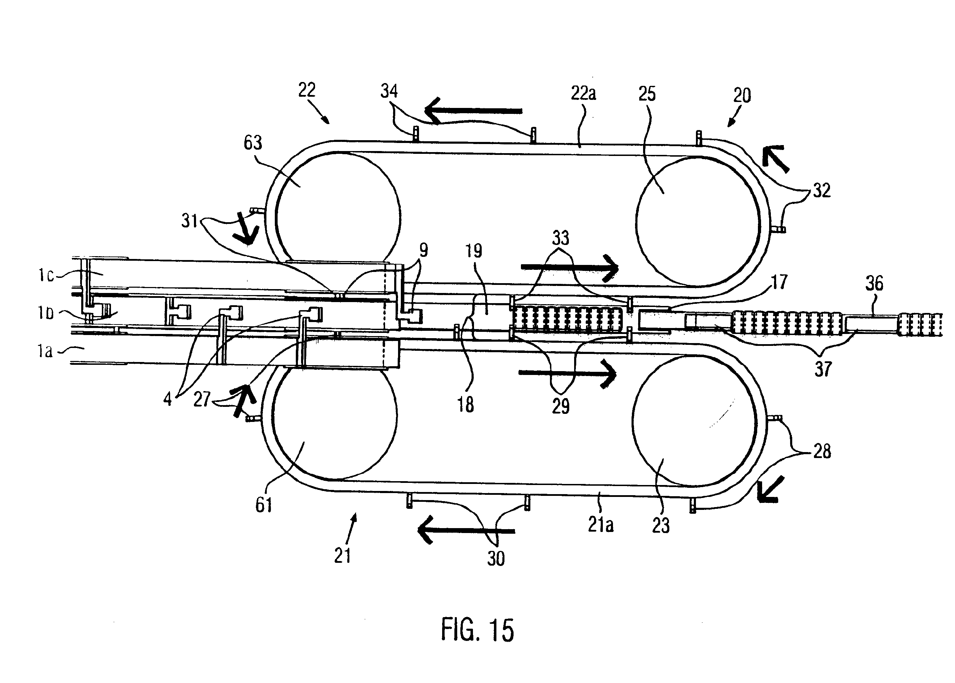

Die beiden Fördervorrichtungen 21, 22 der Fördereinheit 20 gemäß den Figuren 14 und 15 bilden somit einen doppelten Zwei-Zug-Riemen und sind derart zueinander angeordnet, dass die beiden Zahnriemen 21 a, 21 b, 22a, 22b der beiden Fördervorrichtungen 21, 22 sich jeweils parallel auf einer gemeinsamen vertikalen Ebene gegenüberliegen, das heißt der obere Zahnriemen 21a der ersten Fördervorrichtung 21 liegt parallel gegenüber dem oberen Zahnriemen 22a der zweiten Fördervorrichtung 22 und der untere Zahnriemen 21 b der ersten Fördervorrichtung 21 liegt parallel gegenüber dem unteren Zahnriemen 22b der zweiten Fördervorrichtung 22.

Dabei sind die beiden Antriebseinheiten 23, 25 der jeweils oberen Zahnriemen 21 a, 22a und die beiden Antriebseinheiten 24, 26 der jeweils unteren Zahnriemen 21b, 22b derart miteinander (mechanisch oder elektrisch) gekoppelt, dass sie mit gleicher Antriebsdrehzahl rotieren, so dass die einander gegenüberliegenden oberen bzw. unteren Zahnriemen 21a, 22a, 21b, 22b der beiden Fördervorrichtungen 21, 22 jeweils immer völlig synchron zueinander mit gleicher Geschwindigkeit bewegt werden.

Die an den Zahnriemen 21a, 21b, 22a, 22b angebrachten Mitnehmerpaare 27, 28, 29, 30, 31, 32, 33, 34 sind dabei so angeordnet, dass sich die Mitnehmerpaare der beiden oberen Zahnriemen 21 a, 22a bzw. der beiden unteren Zahnriemen 21 b, 22b jeweils im Förderspalt 18 fluchtend gegenüberliegen, d.h. die beiden in Förderrichtung gesehen vorderen Mitnehmer des Mitnehmerpaares 29, 33 und die beiden in Förderrichtung gesehen hinteren Mitnehmer des Mitnehmerpaares 29, 33 liegen an beiden Seiten des Förderspalts 18 einander paarweise gegenüber. Die Produktstangen G werden somit im Förderspalt 18 gemeinsam durch die Mitnehmerpaare 29, 33 der beiden Fördervorrichtungen 21, 22, also durch insgesamt vier Mitnehmer (zwei vorne und zwei hinten) gehalten und auf der Gleitschiene 19 in horizontaler Richtung zur Mitnehmerkette 36 weitergefördert.

Im dargestellten Ausführungsbeispiel der Fördereinheit 20 nach den Figuren 14 und 15 besitzt jeder Zahnriemen 21a, 21b, 22a, 22b zwei Mitnehmerpaare 27, 28, 29, 30, 31, 32, 33, 34, die entlang des Riemenverlaufes einander diametral gegenüberliegend angeordnet sind, d.h., während das Mitnehmerpaar 27, 31 eines Zahnriemens 21a, 22a mit der Aufnahmestation 16 in Eingriff gelangt, verlässt das andere Mitnehmerpaar 28, 32 des entsprechenden Zahnriemens 21a, 22a gerade die Übergabestation 17. Die Mitnehmerpaare 27, 28, 29, 30, 31, 32, 33, 34 des oberen und unteren Zahnriemens 21 a, 21 b, 22a, 22b einer Fördervorrichtung 21, 22 sind in ihrer relativen Position entlang des Riemenverlaufes um 90° zueinander versetzt, d.h. während sich die Mitnehmerpaare 27, 28, 31, 32 des oberen Zahnriemens 21a, 22a gerade beim Eintritt bzw. Austritt aus der Aufnahme- bzw. Übergabestation 14, 16 befinden, sind die Mitnehmerpaare 29, 30, 33, 34 des unteren Zahnriemens 21 b, 22b eingriffsfrei mittig auf den parallelen Seitenflanken des Zahnriemens 21 b, 22b beim Stangentransport auf der Gleitschiene 19 bzw. produktfrei auf der von der Gleitschiene 19 abgewandten Seite angeordnet.

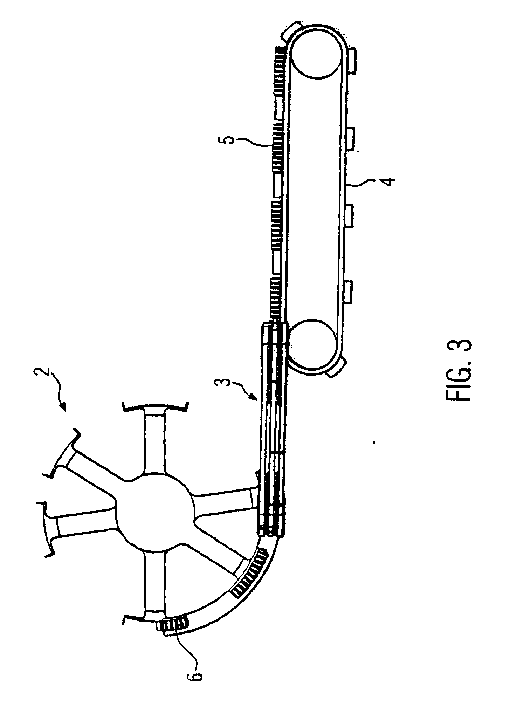

Mit Bezug auf Figur 15 soll schließlich noch die Funktionsweise der Fördereinheit 20 im Betriebszustand erläutert werden. Die Funktionsweise der Fördereinheit 20 ist weitestgehend ähnlich zu derjenigen, der unter Bezugnahme auf Figur 15 geschilderten Funktionsweise der Fördervorrichtung 1, da die Fördereinheit 20 ihrerseits aus zwei Fördervorrichtungen 21, 22 aufgebaut ist, die sich vom Ausführungsbeispiel der Fördervorrichtung 1 nach den Figuren 3 bis 5 vor allem dadurch unterscheiden, dass die Fördervorrichtungen 21, 22 in der Fördereinheit 20 als Zwei-Zug-Riemen ausgeführt sind, während die vorgelagerte Fördervorrichtung 1 als Drei-Zug-Riemen ausgeführt ist. Allerdings wäre es auch möglich, je nach Einsatzfall, die Fördervorrichtungen 21, 22 der Fördereinheit 20 aus drei oder mehr Riemen oder sonstigen Förderern (Ketten, Scheiben, Rädern...) aufzubauen, solange die relative Anordnung der beiden Fördervorrichtungen 21, 22, zueinander eingehalten wird.

Gemäß Figur 15 sind zwei aufeinander synchronisierte Mitnehmerpaare 27, 31 des ersten, oberen Zahnriemens 21a, 22a der beiden Fördervorrichtungen 21, 22 gerade dabei, in die Aufnahmestation 14 einzutreten, um eine Produktstange G aus der vorgelagerten Fördervorrichtung 1 zu übernehmen. Demzufolge muss die Geschwindigkeit des oberen Zahnriemens 21a, 22a der beiden Fördervorrichtungen 21, 22 auf eine Aufnahmegeschwindigkeit gedrosselt werden, die zu der Übergabegeschwindigkeit der vorgelagerten Fördervorrichtung 1 synchron ist. Das andere Mitnehmerpaar 28, 32 des oberen Zahnriemens 21a, 22a hat jeweils gerade die Übergabestation 16 zur nachgelagerten Mitnehmerkette 36 verlassen, ist geleert und steht außer Eingriff, wobei jedoch seine Geschwindigkeit durch die gedrosselte Geschwindigkeit des mit der Aufnahmestation 14 im Eingriff befindlichen Mitnehmerpaares 27, 31 mitbestimmt wird, weshalb sich beide Mitnehmerpaare 27, 28, 31, 32 des oberen Zahnriemens 21a, 22a nur mit reduzierter Geschwindigkeit (verdeutlicht durch ein kurzes Pfeilsymbol) fortbewegen.

Ein Mitnehmerpaar 29, 33 des zweiten, unteren Zahnriemens 21 b, 22b befindet sich mit einer eingefügten Produktstange G auf der Gleitschiene 19 und beschleunigt diese Produktstange G mit hoher Geschwindigkeit (verdeutlicht durch ein langes Pfeilsymbol), um sie an die gerade frei gewordene Übergabestation 17 zu bringen und die Produktstange G dort in das nächste freie Aufnahmeintervall zwischen den Abstandshaltern 37 der Mitnehmerkette 36 einzulegen. Sobald dieses Mitnehmerpaar 29, 33 die Übergabeposition 17 erreicht hat, wird die Umlaufgeschwindigkeit des zweiten, unteren Zahnriemens 21 b, 22b auf eine Übergabegeschwindigkeit abgebremst werden, die mit der Umlaufgeschwindigkeit der nachfolgenden Mitnehmerkette 36 synchronisiert ist, um so eine fehlerfreie Übergabe der Produktstange G zu realisieren.

Das andere, zweite Mitnehmerpaar 30, 34 des unteren Zahnriemens 21 b, 22b läuft mit hoher Geschwindigkeit auf der der Gleitschiene 19 abgewandten Seite der Fördervorrichtung 21, 22 in einer der Förderrichtung entgegengesetzten Richtung zurück zur Aufnahmestation 14, wobei das Mitnehmerpaar 30, 34 geleert und nicht im Eingriff mit irgendeiner anderen, angrenzenden Baugruppe steht, so dass die Geschwindigkeit dieses Mitnehmerpaares 30, 34 durch die Geschwindigkeit des die Produktstange G fördernden und anschließend abgebenden Mitnehmerpaares 29, 33 bestimmt wird.

Zum gleichen Zeitpunkt zu dem das Mitnehmerpaar 29, 33 die Übergabestation 17 erreicht und die Produktstange G an die nachfolgende Mitnehmerkette 36 abgibt, wird das andere Mitnehmerpaar 30, 34 des unteren Zahnriemens 21 b, 22b das vorauseilende Mitnehmerpaar 27, 31 des oberen Zahnriemens 21a, 22a an der Aufnahmestation 14 eingeholt haben, um sofort ohne Wartezeit oder Leertakt die nächste Produktstange G von der vorausgehenden Fördervorrichtung 1 übernehmen zu können.

Die vorteilhafte Wirkungsweise der erfindungsgemäßen Fördervorrichtung 1 und Fördereinheit 20 wird dem Fachmann, insbesondere durch die schematischen Visualisierungen der Figuren 12 und 15, in denen die relativen Positionen und Geschwindigkeiten der Mitnehmerpaare 2 bis 10, 27 bis 34 entlang des Riemenverlaufes für einen Betriebszustand exemplarisch dargestellt wurden, sofort begreiflich. Durch eine derartige Fördervorrichtung 1 bzw. Fördereinheit 20 wird eine Verkettung von Verarbeitungsschritten, wie insbesondere von Erst- und Zweitverpackungsprozess, ermöglicht, ohne dass die vor- und nachgelagerten Verarbeitungsmaschinen durch diese Verkettung in ihrer Auslastung negativ beeinflusst werden (d.h. kein Ausführen von Leertakten und kein Anhalten erforderlich).

Der Wendekopf 1 bzw. 35 kann als Zwischenrad oder Rotationskopf 1 ausgebildet sein, wie nachfolgend genauer beschrieben oder ein solcher Rotationskopf kann auch innerhalb der Einzelartikel-Verpackungsmaschine stromauf des Wendekopfs 1 oder 35 vorgesehen sein.

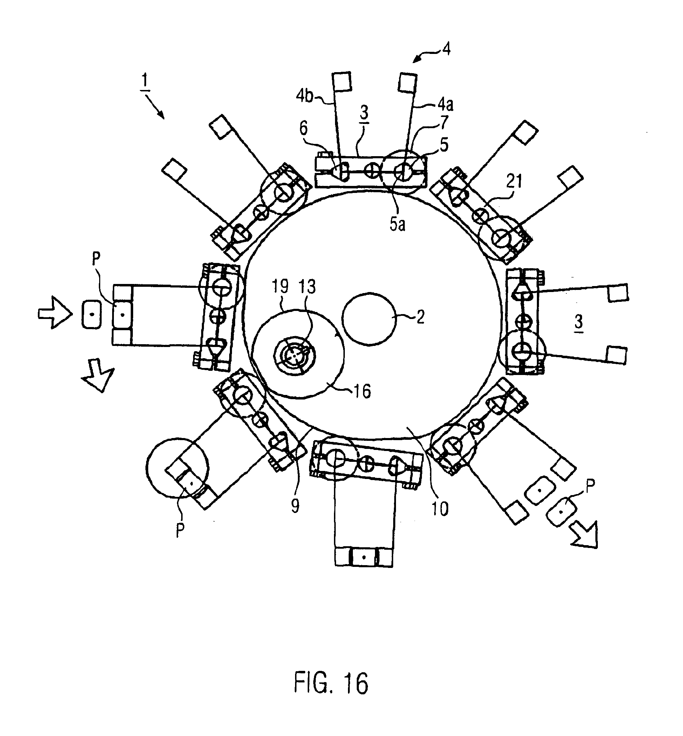

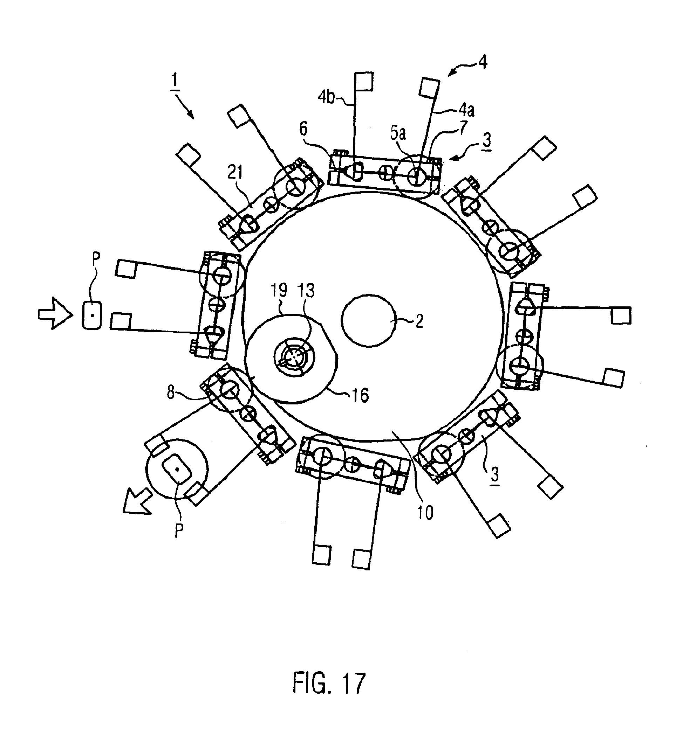

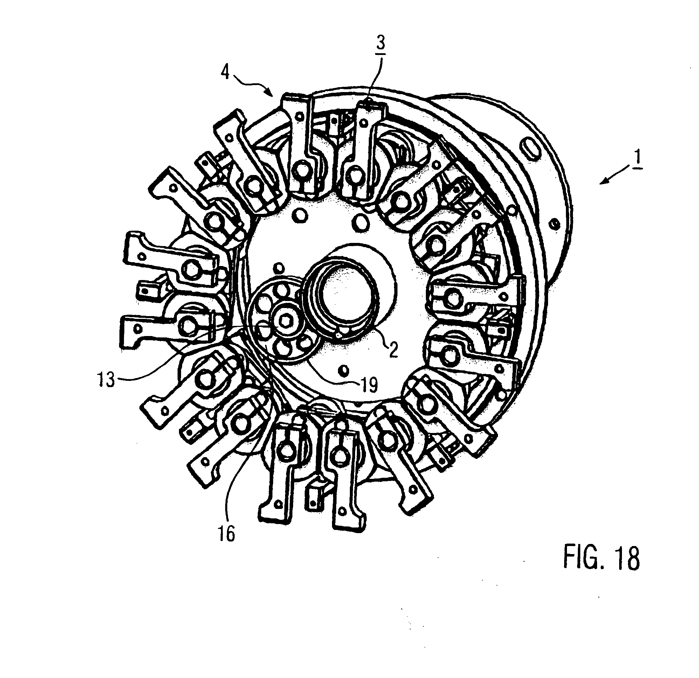

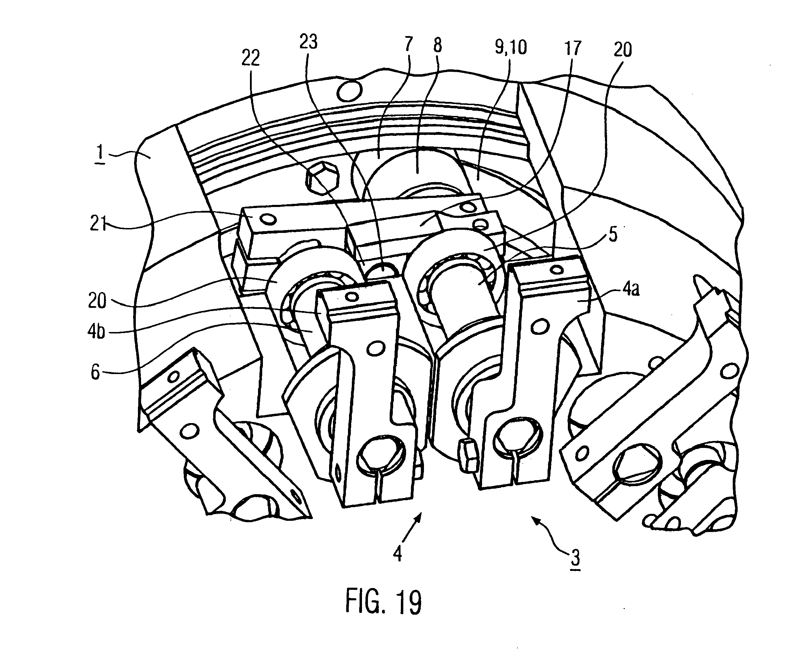

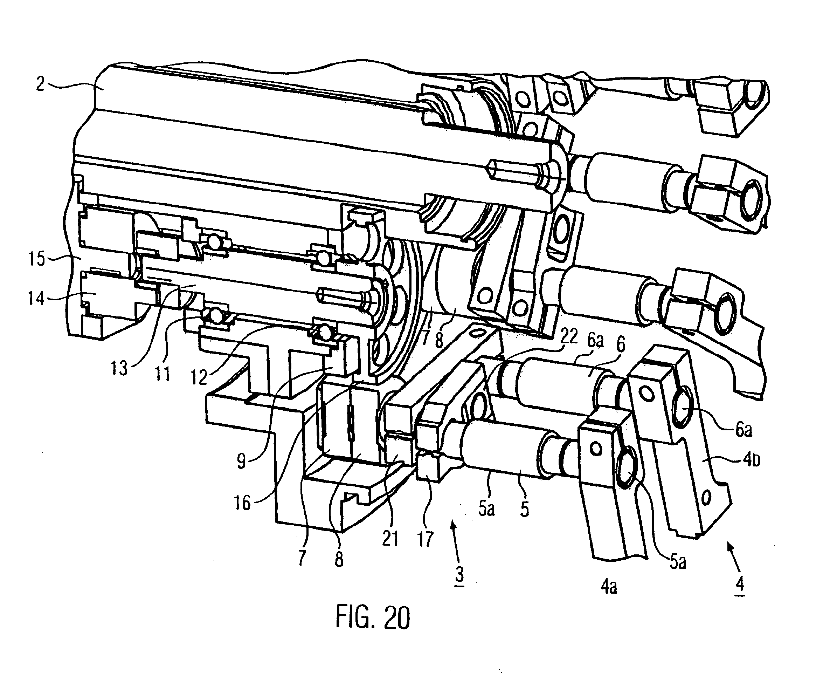

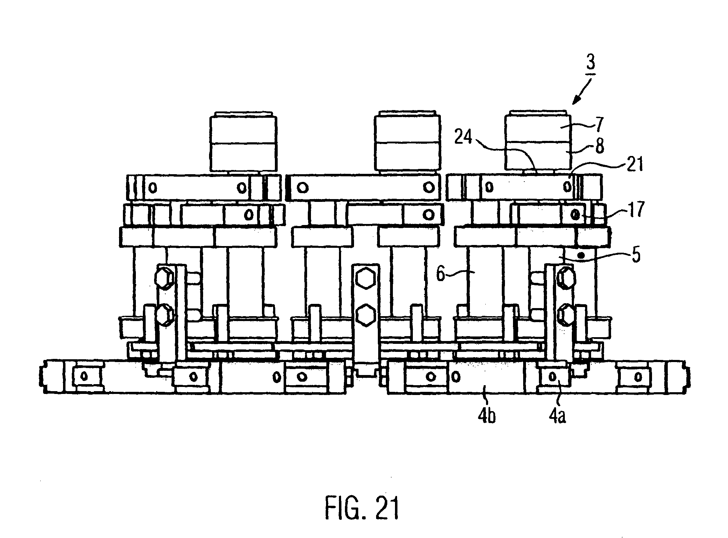

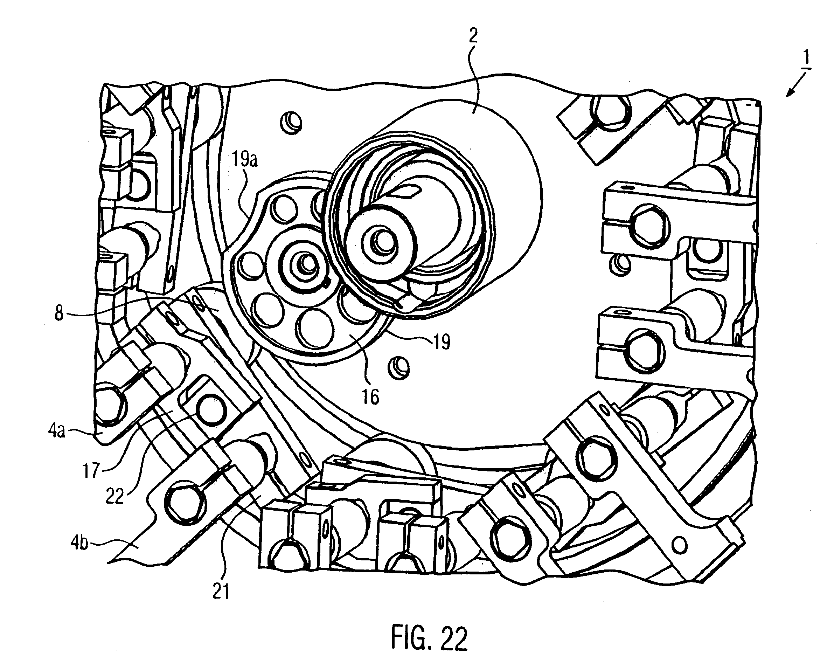

Die nachfolgende Beschreibung einer entsprechenden Steuerungseinrichtung, die in Verbindung mit den Figuren 16 bis 22 erfolgt genießt Schutz sowohl in Verbindung mit der voranstehenden Beschreibung und den Figuren 1 bis 15 als auch unabhängig und separat hiervon.

Die Erfindung betrifft eine Steuereinrichtung für Produkt-Halteeinrichtungen, insbesondere für eine Verpackungsmaschine zur Verpackung kleinstückiger Produkte, wie kleinstückiger Süßwaren, mit einem Rotationskopf mit einer Mehrzahl von mit diesem umlaufenden Klemmeinheiten, wobei jede Klemmeinheit ein Klemmbackenpaar sowie zumindest eine Steuerrolle in Kontakt mit einer ersten Steuerkurve für Öffnungs- und Schließbewegung des Klemmbackenpaares aufweist.

In der Verpackungsindustrie werden Hochleistungs-Verpackungsmaschinen zur Verpackung kleinstückiger Süßwaren wie Hart- oder Weichkaramellen, Pralinen oder anderer kleinstückiger Süßwaren verwendet, die Verpackungsleistungen von bis zu ca. 2 000 Produkten pro Minute erreichen.

Insbesondere sind solche Verpackungsmaschinen als kontinuierliche Verpackungsmaschinen bekannt, bei denen Produkte in einem kontinuierlichen Durchlauf durch die Maschine in der Regel zwischen mehreren rotierenden Köpfen übergeben, durch die Verpackungsmaschine hindurch bewegt und die Produkte verpackt werden.

Es besteht bei derartigen Maschinen das Bedürfnis fehlerhafte Produkte (z. B. unverpackt gebliebene Produkte) oder auch fehlerhafte Verpackungen frühzeitig zu erkennen um auf diese Weise weitere Verpackungsschritte an einem fehlerhaften Produkt einzusparen bzw. nur qualitativ einwandfrei verpackte Produkte z. B. an einen nachfolgenden Stapelpacker für Sammelverpackungen weiterzugeben.

Angesichts der hohen Verpackungsgeschwindigkeiten, den entsprechend hohen Bewegungsgeschwindigkeiten der einzelnen Verpackungsorgane wie auch der Haltemittel (Haltebackenpaare, die für die Produktführung durch die Maschine vorhanden sind) ist es schwierig, z. B. innerhalb eines Arbeitstaktes ein fehlerhaftes Produkt zu erkennen und aus der Verpackungsmaschine zu entfernen ohne die Produktführung eines vorauslaufenden Produktes oder des nachfolgenden Produktes zu beeinträchtigen.

So steht z. B. für eine solche gewillkürte Produktausschleusung aus dem Verpackungsprozess bei einer Arbeitsgeschwindigkeit von z. B. 1 600 Arbeitstakten pro Minute nur ein Zeitraum von weniger als 1/10 s zur Verfügung.

Der Erfindung liegt daher die Aufgabe zu Grunde, eine Steuereinrichtung der eingangs genannten Art zu schaffen, die es gestattet, auch in schnelllaufenden Arbeitsvorgängen, z. B. in Verpackungsmaschinen für kleinstückige Produkte wie kleinstückige Süßwaren, eine äußerst präzise Ausschleusung von Produkten aus einem kontinuierlichen Arbeitsprozess, wie einem Verpackungsprozess, in unkomplizierter und dabei sehr zuverlässiger Weise zu ermöglichen.

Diese Aufgabe wird erfindungsgemäß durch eine Steuereinrichtung mit den Merkmalen des Patentanspruchs 1 gelöst.

Auf diese Weise ist es möglich, einzelne Produkte aus einem schnell bewegten Produktstrom, wie z. B. das Aussortieren einzelner Produkte in einer kontinuierlich arbeitenden Verpackungsmaschine hoher Leistung, zu erreichen. Dabei ist das Aussortieren einzelner Produkte in sehr kurzer Zeit und impulsartig in einem Zeitfenster von weniger als einer Zehntelsekunde, vorzugsweise weniger als 5/100 s, möglich.

Vorzugsweise erfolgt das Schalten einer willkürlichen Öffnungsbewegung für eine Klemmeinheit zur Halterung von Produkten, wie z. B. einem Klemmbackenpaar, mittels einer Steuerkurve wie einer exzentrisch gelagerten Kreisscheibe, einer Exzenterscheibe oder einer Kurvenscheibe die vorzugsweise durch einen Servomotor zur Rotation angetrieben wird und eine entsprechende Öffnungsbewegung für die Klemmbacken zur Produktfreigabe innerhalb eines Arbeitstaktes herbeiführen kann, indem diese speziell für eine gewillkürte Produktausschleusung vorgesehene Steuerkurve in einen Bewegungsweg einer Tastrolle gebracht wird, die in Verbindung mit der Klemmeinheit eine gewillkürte Öffnungsbewegung einer entsprechenden Produkthalterung, wie eines Klemmbackenpaares, herbeiführt.

Vorzugsweise kann ein entsprechender Servoantrieb für die Bewegung dieser, für eine Produktausschleusung vorgesehene Steuerkurve (Kreis- oder Exzenterscheibe bzw. Kurvenscheibe) innerhalb eines Arbeitstaktes erfolgen und kann ein entsprechender Servoantrieb adaptiv auf Prozessvorgänge innerhalb der Arbeitsmaschine, wie einer Verpackungsmaschine, reagieren.

Vorzugsweise folgt ein Ausschleusungsvorgang für ein Produkt aus einem kontinuierlichen Produktstrom unter Ausnutzung der Fliehkraft bzw. Zentripedalkraft eines umlaufenden Rotationskopfes mit dem die entsprechenden Klemmeinheiten in Kontakt mit einer ersten Steuerkurve für eine reguläre Steuerung der Produkthalterung (Öffnungs- und Schließbewegung von Klemmbackenpaaren) umlaufen.

Die vorzugsweise vorgesehene, fliehkraftunterstützte Aussortierung (Ausschleusung) von Produkten kann durch zusätzliche pneumatische und/ oder mechanische, an dem Produkt angreifende, Kräfte unterstützt werden.

Vorzugsweise weist die ein Klemmbackenpaar aufweisende Klemmeinheit paarweise eine Steuerrolle und eine Tastrolle auf. Die Steuerrolle ist in entsprechendem Nockenfolgerkontakt mit einer ersten Steuerkurve zur regulären Steuerung für eine Öffnungs- und Schließbewegung eines Klemmbackenpaares. Die Steuerrolle ist auf einem Wellenzapfen aufgenommen. Die Tastrolle ist ebenfalls auf vorzugsweise demselben Wellenzapfen aufgenommen, dessen kurvengesteuerte Bewegung über einen Kurvenhebel auf eine Lagerungswelle übertragen wird, mit der eine Klemmbacke des Klemmbackenpaares fest verbunden ist. Eine Bewegungsübertragung auf die weitere Klemmbacke des Klemmbackenpaares erfolgt vorzugsweise über einen mit dem Kurvenhebel verbundenen Gleitsteinmechanismus.

In einen Bewegungsweg der üblicherweise "leerlaufenden", d. h. mit der Klemmeinheit umlaufenden Tastrolle kann in Abhängigkeit von einem Auswerfersignal, also durch entsprechend signalgesteuerte Ansteuerung, eine zweite Steuerkurve als Impulsgeber gebracht werden, die zu einer Rotationsbewegung der Lagerungswelle und damit zu einer Öffnungsbewegung des zugehörigen Klemmbackenpaares für eine willkürliche Auswerfbewegung führt.

Durch die Erfindung ist es möglich, auch bei sehr schnell ablaufenden Vorgängen einzelne Produkte aus einem Produktstrom, der z. B. durch eine kontinuierliche Verpackungsmaschine hindurchläuft, innerhalb eines Arbeitstaktes auszusortieren und auf diese Weise eine hohe Produkt- bzw. Verpackungsqualität zu erreichen, wie auch sicherzustellen, dass nur fehlerlose Produkte z. B. in nachfolgende Sammelverpackungen abgegeben werden.

Die Erfindung wird nachstehend anhand eines Ausführungsbeispieles und zugehöriger Zeichnung näher erläutert. In diesen zeigen:
- Figur 1: einen Rotationskopf mit einer Mehrzahl von mit diesen umlaufenden Klemmeinheiten in Kontakt mit einer Kurvenscheibe und einer Aufwerfer-Exzenterscheibe in schematischer Vorderansicht,
- Figur 2: eine Ansicht ähnlich derjenigen in Figur 1 für den Fall einer Auswerfer-Betätigung der Auswerfer-Exzenterscheibe zur Ausschleusung eines Produktes,
- Figur 3: eine perspektivische Darstellung des Rotationskopfes nach Figur 1
- Figur 4: einen Ausschnitt des Rotationskopfes nach Figur 1 unter Darstellung einer Klemmeinheit 3 mit einem Haltebackenpaar 4
- Figur 5: eine schematische, perspektivische Längsschnittdarstellung der Steuereinrichtung nach dem vorliegenden Ausführungsbeispiel in Teildarstellung des Rotationskopfes nach Figur 1,
- Figur 6: eine schematische Draufsicht auf drei Klemmeinheiten des Rotationskopfes nach Figur 1 ohne zugehörige Lagerungsmittel innerhalb des Rotationskopfes, und
- Figur 7: eine perspektivische Ausschnittsdarstellung des Rotationskopfes nach Figur 1 für einen Bereich einer Exzenterscheibe zur Produktausschleusung nach dem vorliegenden Ausführungsbeispiel.

Ehe auf den in Figur 2 schematisch dargestellten Vorgang des Ausschleusens oder Aussortierens eines (fehlerhaften) Produktes aus einem Produktstrom aus kleinstückigen Produkten, der in einer nach dem kontinuierlichen Arbeitsprinzip arbeitenden Hochleistungs-Verpackungsmaschine z. B. mit Leistungen zwischen 1 500 und 2 000 Produkten pro Minute arbeitet, vorgesehen sein soll, genauer eingegangen wird, soll kurz die zugrunde liegende Steuereinrichtung anhand von Figuren 3 bis 7 erläutert werden. Ein Rotationskopf, auch als Zwischenrad 1 bezeichnet, ist zur Rotation um eine stationäre, im Maschinengestell gelagerte Achse 2 gelagert und weist eine Reihe von, in diesem Fall z. B. acht (Figur 1), Klemmeinheiten 3 auf, die mit dem Rotationskopf 1 um die stationäre Achse 2 umlaufen.

Jede Klemmeinheit 3 weist ein Klemmbackenpaar 4 mit Klemmbacken 4a, 4b auf, zwischen denen ein (in den Figuren 3 bis 7 nicht dargestelltes) Produkt P aufgenommen und geklemmt werden kann, um nach einem entsprechenden Teilumlauf an einer entsprechenden Abgabeposition abgegeben oder von einem anderen Haltebackenpaar eines anderen Rades einer hier nicht näher dargestellten, z. B. nach dem kontinuierlichen Verpackungsprinzip gemäß EP 1 712 472 B1 arbeitenden Verpackungsmaschine, verpackt zu werden. In vorliegendem Fall ist jeder Klemmbacke 4a, 4b jedes Klemmbackenpaares 4 eine eigene Steuerwelle 5 (Klemmbacke 4a) bzw. Lagerungswelle 6 (Klemmbacke 4b) zugeordnet, so dass die Klemmbacken 4a, 4b über eigene Lagerungsachsen 5a, 6a gelagert und zu einer Öffnungs- und Schließbewegung gemeinsam mit einer Verdrehung der Steuerwelle 5 und der Lagerungswelle 6 bewegbar sind. Die Klemmeinheiten 3 sind über Kugellager 20 in Verbindung mit Umfangsabschnitten 5b, 6b der Steuer- bzw. Lagerungswelle 5a, 6a in einem vorderen Innenbereich des Rotationskopfes 1 drehbar gelagert (s. Figur 4). Zu anderen Ausführungen kann die Öffnungs- und Schließbewegung der Klemmbacken (4a, 4b) eines Klemmbackenpaares 4 auch über eine gemeinsame Servowelle oder auch um Achsen erfolgen, die für jede Klemmbacke einzeln im Wesentlichen rechtwinkelig zu einer Rotationsachse eines zugehörigen Rotationskopfes an dem die Klemmbackenpaare gelagert sind oder auch in gleicher, rechtwinkeliger Orientierung beider Klemmbacken eines Klemmbackenpaares gemeinsam ist.

D. h. die Klemmbacken 4a, 4b eines Klemmbackenpaares 4 können in anderen Ausführungsformen auch auf einer gemeinsamen Achse koaxial angeordnet sein bzw. es ist auch ausreichend wenn nur eine Klemmbacke jedes Klemmbackenpaares beweglich ist und für eine Öffnungs- oder Schließbewegung des Klemmbackenpaares 4 für die Aufnahme oder Abgabe eines Produktes P bewegungsgesteuert ist. Die Klemmbacken 4 können auch über eine Federeinrichtung gegeneinander zu einer Schließbewegung vorgespannt sein, so dass die Öffnungsbewegung eines Klemmbackenpaares 4 entgegen einer Federkraft erfolgt.

In anderen Ausführungsformen können die Klemmbacken 4a, 4b zu einer Öffnungs- und Schließbewegung auch um eine gemeinsame oder zwei beabstandete Schwenkachsen schwenkbar sein, die sich rechtwinklig zur Achse 2 des Zwischenkopfes 1 erstrecken (d. h. in Figur 1 parallel zur Zeichenebene verlaufend), wobei dann ein Produkt P, nicht wie in Figur 1 und 2 gezeigt, über seine Länge, d. h. tangential, sondern über seine Breite, d. h . radial geklemmt wird und die Klemmbackenpaare gegenüber der Darstellung in den Figuren 1 und 2 um 90° gedreht, ggf. auch auf einer gemeinsamen Achse, angeordnet sind.

Im vorliegenden Fall wird über die Lagerungswelle 6 (Klemmbacke 4b) jedes Klemmbackenpaares 4, für eine Öffnungs- oder Schließbewegung des Klemmbackenpaares 4 gesorgt. Auf dieser Lagerungswelle 6 ist die Klemmbacke 4b klemmbefestigt. Über einen nachfolgend noch erläuterten Übertragungsmechanismus (Kurvenhebel 21, Gleitstein 22) wird die Öffnungs-Schließbewegung für die Klemmbacken 4a, 4b von der Lagerungswelle 6 (Klemmbacke 4b) auf die Steuerwelle 5 (Klemmbacke 4a) übertragen, wobei die Klemmbacke 4a fest mit der Steuerwelle 5 verbunden ist.

Die Klemmbacke 4b ist fest auf eine entsprechende Lagerungsachse 6 aufgeklemmt.

Diese Bewegungssteuerung wird nachfolgend erläutert (siehe insbesondere Figuren 4 bis 7).

Die Klemmeinheiten 3 sind in dem Rotationskopf 1 über Kugellager 20 gelagert, so dass sich die zugehörigen Steuer- bzw. Lagerwellen 5, 6 jeder Klemmeinheit 3 zur Erzeugung der Öffnungs- und Schließbewegung der Klemmbackenpaare 4 um einen gewissen Winkelbetrag drehen können. Mit Lagerungswelle 6 bzw. Steuerwelle 5 ist die jeweilige Klemmbacke 4a, 4b fest verbunden. Diese Rotationsbewegung der Lagerungswelle 6 bzw. der Steuerwelle 5 wird durch eine feststehende erste Steuerkurve 9 einer Kurvenscheibe 10 erzeugt, auf deren Umfang in einem Nockfolgerkontakt eine Steuerrolle 7 jeder Klemmeinheit 3 aufgrund der Rotationsbewegung des Rotationskopfes 1 abrollt, so dass eine entsprechende radiale Auslenkung der Steuerrolle 7 in die Öffnungs- und Schließbewegung der Klemmbacken 4a, 4b eines Klemmbackenpaares 4 umgesetzt wird. Hierzu ist ein Wellenzapfen 24 vorgesehen, der eine Doppelanordnung aus Steuerrolle 7 und einer weiteren Tastrolle 8 trägt, die auf dem Wellenzapfen 24 gelagert sind (siehe Figur 4). Dieser trägt andererseits lose (mit Spiel) einen Kurvenhebel 21, der die Radialauslenkung des Wellenzapfens (vermöge der Steuerrolle 7) auf die Lagerungswelle 6 bzw. Lagerungsachse 6a der Klemmbacke 4b des Klemmbackenpaares 4 überträgt und der fest auf diese Lagerungswelle 6 aufgeklemmt ist.

In Abhängigkeit von der Kurvenbewegung des Kurvenhebels, verursacht durch den Nockenfolgerkontakt zwischen Steuerrolle 7 und stationärer Kurvenscheibe 10 mit der ersten Steuerkurve 9 wird der auf dem Wellenzapfen 24 gelagerte Kurvenhebel 21, der auf der Lagerungsachse 6 der Klemmbacke 4b geklemmt ist, bewegt, so dass diese Lagerungswelle 6 eine entsprechende Rotationsbewegung zur einer Öffnungs- oder Schließbewegung der Klemmbacke 4b ausführt. Die Übertragung dieser Bewegung auf die andere Klemmbacke 4a der Klemmeinheit 3 wird durch einen Übertragungshebel 17 mittels eines Gleitsteines 22 realisiert, der über einen Verbindungsstift bzw. Zapfen 23 mit dem Kurvenhebel 21 verbunden ist, so dass per Gleitstein 22 die Steuerbewegung des Kurvenhebels 21 auf den Übertragungshebel 17 übertragen wird, der auf das Ende der Steuerwelle 5 mit der Steuerachse 5a aufgeklemmt ist (Wellenzapfen 24 und Steuerwelle 5 sind also unterbrochen). Auf diese Weise führt die Klemmbacke 4a eine zur Klemmbacke 4b korrespondierende Öffnungs- oder Schließbewegung unter Rotationsbewegung der Steuerwelle 5 durch den Übertragungshebel 12 aus. Dieser Bewegungs-Übertragungsmechanismus mit Steuerrolle 7, Wellenzapfen 23, Kurvenhebel 21 in Gleitsteinverbindung mit einem Übertragungshebel 17 zur Steuerung einer Öffnungs- und Schließbewegung der Klemmbacken 4a, 4b ist für sämtliche, mit dem Rotationskopf 1 umlaufenden Klemmeinheiten 3 jeweils vorgesehen (siehe Figur 1).

Auf diese Weise wird ein Produkt, z. B. in einer 9-Uhr-Position aufgenommen (vgl. Figur 1) und nach Erreichen einer 5-Uhr-Position abgegeben.

Die Steuerrolle 7 in Verbindung mit der Kurvenscheibe 10 sorgt also für die übliche Öffnung- und Schließbewegung des Haltebackenpaares 4 durch abrollenden Kontakt der entsprechenden Kurvenrolle 7 an der stationären Kurvenscheibe 10. Die anderen Klemmeinheiten 3 haben einen korrespondierenden Aufbau und laufen bei einem Drehantrieb des Rotationskopfes 1 mit diesem um.

Für eine gewillkürte Auswerferbewegung eines fehlerhaften, z. B. unverpackten oder falsch verpackten Produkts, ist in der Kurvenscheibe 10 und dem übrigen Lagerungsaufbau des Rotationskopfes 1 (vergleiche Lager 11, 12) eine Exzenterwelle 13 gelagert, die über eine Kupplung 14 durch einen eigenen Servomotor 15 angetrieben wird (siehe Figuren 2, 5, 7). Dieser Servomotor 15 kann Steuersignale zu einer Umfangsverdrehung, vorzugsweise 360°-Drehung einer vorzugsweise achsparallel zur Achse der Kurvenscheibe angeordnete Exzenterscheibe oder Kurvenscheibe 16 erhalten, mit der an einer bestimmten Umfangsposition der Kurvenscheibe 10, z. B. einer 7-Uhr-Position, wie dargestellt, die Exzenter- oder Kurvenscheibe 16 in einen Bewegungsweg der ansonsten "leerlaufenden" Tastrolle 8 gelagert, die gemeinsam mit der Steuerrolle 7 auf dem Wellenzapfen 24 gelagert ist. Dadurch wird unabhängig von einer Steuerung durch die Steuerrolle 7 die Lagerungswelle 6 durch den die Lagerungswelle 6 um einen bestimmten Rotationswinkel verdrehenden Eingriff der Tastrolle 8 aufgrund des Kontaktes mit der Exzenter- oder Kurvenscheibe 16 gedreht und damit über den gleichen Mechanismus, wie oben für die "normale" Öffnungs- und Schließbewegung des Klemmbackenpaares 4 beschrieben (Kurvenhebel 21, Lagerungswelle 6, Gleitstein 22, Steuerwelle 5), eine außerplanmäßige Öffnungsbewegung des Klemmbackenpaares 4 zum Ausschleusen eine geklemmten Produktes bewirkt. Vorzugsweise sind Steuer- und Kurvenrolle als Kugellager ausgebildet, deren Innenring auf den Wellenzapfen 24 sitzt. In Figur 2 ist in der Ausschleusungsposition (7-Uhr-Position) die koaxial zur Steuerrolle 7 angeordnete Tastrolle 8 dargestellt, die in den übrigen Teilen der Figur 2, ebenso wie in Figur 1 weggelassen ist. Tastrolle 8 und Steuerrolle 7 sind durchmessergleich (siehe Figur 4).

Der Bewegungsübertragungsmechanismus (Kurvenhebel 21, geklemmt auf Klemmbacken-Lagerungswelle 6, Stiftverbindung zwischen Kurvenhebel und Gleitstein 22, Gleitstein 22 in Gleitnut eines beweglich angreifenden Übertragungshebel 17, festgeklemmt auf der weiteren Klemmbacken-Steuerwelle 5), kann auch in anderer Weise, z. B. in Verbindung mit kämmenden Zahnsegmenten zur gegenseitigen Bewegungssteuerung der Klemmbacken eines Klemmbackenpaares ausgebildet sein.

Hinsichtlich der Massenträgheiten, Arbeitsgeschwindigkeiten und der Funktionssicherheit der Anordnung unter hohen Arbeitsgeschwindigkeiten wird allerdings die vorliegend erläuterte Anordnung bevorzugt.

In Verbindung mit einer hier nicht dargestellten Sensoranordnung kann ein solches Ausschleusungssignal an den Servomotor 15 gegeben und die Aussortierung oder Ausschleusung eines Produktes P innerhalb eines Arbeitstaktes in einem Zeitfenster eines Bruchteils einer Sekunde, so dass der gesamte Durchlaufprozess des Produktstromes durch die Arbeitsmaschine, insbesondere Verpackungsmaschine nicht beeinträchtigt wird.

In Abhängigkeit von den Platzverhältnissen können innerhalb eines Rotationskopfes 1 auch mehrere derartiger Exzenterwellen und Aussortiermechanismen angeordnet sein, so dass eine Aussortierung von Produkten an verschiedenen Stellen eines Umfangsweges der Produkte im Bereich des Rotationskopfes 1 vorgenommen werden kann.

Das Prinzip der Vorrichtung nach dem vorliegenden Ausführungsbeispiel zum Aussortieren bzw. Ausschleusen eines unvollkommenen (fehlerhaften, z. B. unverpackten oder falsch verpackten oder schlecht verpackten Produktes) aus einem Produktstrom ist schematisch nochmals anhand der Figuren 1 und 2 nachfolgend erläutert. Der Rotationskopf 1 weist acht Arbeitsstationen auf, die mit ihm umlaufen und hier als Klemmeinheiten 3 bezeichnet sind, mit Klemmbackenpaaren 4.

Innerhalb der stationären, eine feste Achse 10a aufweisende Kurvenscheibe 10 bzw. dem übrigen stationären Achsaufbau der Einrichtung ist die Exzenterwelle 13 mit der Kreisscheibe 16 derart angeordnet, dass die Kreisscheibe 16 exzentrisch gelagert ist, so dass bei einer Rotation der Exzenterwelle 13, die mit dieser fest verbundene Kreisscheibe 16 eine entsprechende Verlagerung ihrer Umfangskurve als zweite Steuerkurve 19 ausführt. Es ist selbstverständlich auch möglich, die Kreisscheibe 16 als Exzenterscheibe mit einem Nockenprofil auszuführen und zentrisch zu lagern bzw. fest mit der sie tragenden Exzenterwelle zu verbinden.

Figur 1 zeigt die übliche Arbeitsweise der Einrichtung für eine fehlerfreie Produktführung eines Produktstromes, z. B. durch eine Verpackungsmaschine in der sich die vorliegende Einrichtung als ein Zwischenrad 1 bzw. Rotationskopf 1 befindet, wobei die Produkte P von der sich in einer 9-Uhr-Position befindenden Klemmeinheit 2 zwischen den Haltebacken 4a, 4b des Haltebackenpaares aufgenommen und das Produkt P entsprechend geklemmt wird, wobei in Verbindung mit der Umlaufbewegung des Rotationskopfes 1 bzw. Zwischenrades 1 um die stationäre Achse 2 (die auch die Zentralachse für die stationäre Kurvenscheibe 10 bildet und eine Zentralachse des Zwischenrades bzw. Rotationskopfes 1 ist) das geklemmte Produkt P aus der 9-Uhr-Position gegen den Uhrzeigersinn in die 5-Uhr-Position befördert und dort z. B. an einen nachgeschalteten Stangenpacker oder auch an eine Abgabeeinrichtung abgegeben oder auch von einem weiteren Verpackungsrad einer kontinuierlichen Verpackungsmaschine zur Fortsetzung der Verpackung oder deren Siegelung und dergleichen übernommen, wird, und zwar unter der Kurvensteuerung durch die Steuerrolle 7 im Eingriff mit der ersten Steuerkurve 9 der stationären Kurvenscheibe 10.

Figur 1 zeigt daher die übliche Arbeitsweise in schematischer Darstellung. Auf dem Bewegungsweg der Klemmeinheit 2 wird auch eine 7-Uhr-Position passiert, in deren Winkelbereich sich die Auswerfer- oder Aussortiereinheit befindet in dem in diesem Bereich die Exzenterwelle 13 mit der Exzenter- oder Kurvenscheibe 16 gelagert ist.

Wird nun durch eine hier nicht dargestellte optische oder z. B. Infrarot-Sensoranordnung festgestellt, dass durch das Zwischenrad bzw. den Rotationskopf 1 ein unverpacktes Produkt P oder ein fehlerhaft verpacktes Produkt P ergriffen wurde, das nicht weiter verarbeitet werden soll (vorzugsweise erfolgt diese sensorische Erfassung schon stromauf der Übergabe des Produktes and das Zwischenrad 1 bzw. den Rotationskopf 1 in der 9-Uhr-Position oder unmittelbar in Verbindung mit dieser oder im Anschluss an diese), so verdreht der Servomotor 15 die Exzenterwelle 13 und drängt damit die exzentrisch gelagerte Kurvenscheibe 16 in den Bewegungsweg, der ansonsten leerlaufenden Tastrolle 8, die ebenfalls in unmittelbarer Nachbarschaft zu der Kurvenrolle 7 als Steuerrollenpaar auf dem Wellenzapfen 24 angeordnet ist (Figuren 2, 4). Auf diese Weise wird eine gewillkürte Öffnungsbewegung der Haltebacke 4a bzw. des Haltebackenpaares 4 in der 7-Uhr-Position initiiert, wie dies in Figur 2 schematisch dargestellt ist und das Produkt auf diese Weise aus dem Produktstrom ausgeschleust und zwar zwischen zwei Arbeitstakten, ohne dass es hierdurch zu Verzögerungen oder Behinderungen der übrigen Produktverarbeitung kommt. Hierzu weist die Kurven- bzw. Exzenterscheibe eine zweite Steuerkurve 19 auf, z. B. einen Kreis, der einseitig abgeflacht ist, wie dies z. B. in der exzentrischen Lagerung der Kurvenscheibe 16 in Figur 2 gezeigt ist. Das zentripedalkraftbedingte und schwerkraftunterstützte Verlassen des Produktes wird vorzugsweise durch eine am Produkt zusätzlich angreifende Zwangskraft, z. B. Pneumatikdruck über eine oder mehrere Ausblasdüsen oder auch mechanisch unterstützt, da ggf. die nur sehr knapp zur Verfügung stehende Zeit für das Ausschleusen des Produktes nicht ausreichend ist.

Würde die Stellung nach Figur 2 beibehalten, werden selbstständig abfolgend mehrere Produkte an dieser Stelle aus dem Produktstrom ausgeschleust. Figur 2 zeigt allerdings nur eine Momentaufnahme des Aussortier- bzw. Ausschleusvorganges. Üblicherweise wird die Exzenterwelle 13 um eine 360°-Drehung gedreht, so dass das Ausschleusen z. B. innerhalb eines Zeitraumes von wenigen hundertstel Sekunden geschieht (in Abhängigkeit von der Arbeitsgeschwindigkeit bzw. der Arbeitstaktanzahl mit der die Maschine betrieben wird) und im Übrigen die Kreis- bzw. Exzenterscheibe 16 sich in ihrer in Figur 1 dargestellten "Ruheposition" befindet.

Die Einrichtung ist insbesondere in nach dem kontinuierlichen Prinzip arbeitenden Verarbeitungsmaschinen, insbesondere einer Verpackungsmaschine als Zwischenrad einsetzbar um in einfacher Weise auch im Hochleistungsbereich das Ausschleusen eines einzelnen Produktes aus einem kontinuierlichen Produktstrom zu ermöglichen. Die Einrichtung kann auch in Kombination mit z. B. einem anschließenden Sammelpacker, der die einzelnen Produkte zu Sammelverpackungen anstapelt, vorgesehen sein, wobei eine solche Aussortier- oder Auswerfeeinheit, wie sie das vorliegende Ausführungsbeispiel in Gestalt der Kreis- bzw. Exzenterscheibe 16 mit Exzenterwelle 13 und zugehöriger Abtastrolle 8 in Verbindung mit einer Lagerungsanordnung für ein Klemmbackenpaar 4 zeigt, auch in Kombination mit anderen Verpackungsrädern oder rotierenden Köpfen einer solchen Verpackungsmaschine vorgesehen sein kann.

### Bezugszeichenliste betreffend die Steuereinrichtung gemäß Figuren 16 - 22

- 1: Rotationskopf / Zwischenrad
- 2: Achse
- 3: Klemmeinheit
- 4: Haltebackenpaar
- 4a, 4b: Haltebacken
- 5: Steuerwelle
- 5a, 6a: Lagerungsachse
- 5b, 6b: Umfangsabschnitte
- 6: Lagerwelle
- 7: Kurvenrolle
- 8: Abtastrolle
- 9: erste Steuerkurve
- 10: Kurvenscheibe
- 11, 12: Lager
- 13: Exzenterwelle
- 14: Kupplung
- 15: Servomotor
- 16: Exzenter- oder Kurvenscheibe
- 17: Lagerungshebel
- 18: Achse
- 19: zweite Steuerkurve
- 20: Kugellager
- P: Produkt

## Patentansprüche

1. Verfahren zur Bildung von Artikelstangen aus Einzelartikeln, insbesondere für Stangenverpackungen, wobei vereinzelte, vorzugsweise verpackte Artikel von einer Abgabeeinrichtung an eine Artikelstangen-Bildungseinrichtung übergeben werden, in der eine vorbestimmte Anzahl von Einzelartikeln zu einer Artikelstange gruppiert werden und diese Artikelstange an eine Übergabeeinrichtung übergeben wird, wobei in Abhängigkeit von einem Beginn der Bereitstellung einer vorbestimmten, vorzugsweise variablen Anzahl von Einzelartikeln und/oder von einem Zeitraum, der zur Gruppierung der vorbestimmten Anzahl von Einzelartikeln zu einer Artikelstange benötigt wird oder zur Verfügung steht, eine Mehrzahl von Artikelstangebildnern der Artikelstangen-Bildungseinrichtung zur Gruppierung der Einzelartikel zu einer Artikelstange und zur Übergabe der Artikelstange an die Übergabeeinrichtung separat und unabhängig voneinander angesteuert werden.

2. Verfahren nach Anspruch 1, **dadurch gekennzeichnet, dass** die Artikelstangenbildner der Artikelstangen-Bildungseinrichtung die Einzelartikel in einer übereinstimmenden Übergabe- oder Aufnahmeposition aufnehmen.

3. Verfahren nach Anspruch 1 oder 2, **dadurch gekennzeichnet, dass** die Einzelartikel von einem Wendekopf einer kontinuierlichen Verpackungsmaschine in einer definierten Übergabeposition bereitgestellt werden, die Einzelartikel in einer vorbestimmten Anzahl von einem Artikelstangenbildner einer vorzugsweise als Gruppierrad ausgebildeten Artikelstangen-Bildungseinrichtung aufgenommen und an die Übergabeeinrichtung übergeben und von dieser vorzugsweise äquidistant an eine Zuführungskette oder einen Zuführungslängsförderer einer Sammelverpackungsmaschine, insbesondere einer Flowpack-Maschine übergeben werden.

4. Verfahren nach zumindest einem der vorhergehenden Ansprüche 1 bis 3, **dadurch gekennzeichnet, dass** die Übergabeeinrichtung aus einer Mehrzahl einzelner, unabhängig voneinander ansteuerbarer Übergabeförderer besteht, wobei die Anzahl der Übergabeförderer vorzugsweise der Anzahl der Artikelstangenbildner der Artikelstange-Bildungseinrichtung entspricht.

5. Verfahren nach zumindest einem der vorhergehenden Ansprüche 1 bis 4, **dadurch gekennzeichnet, dass** Abstände zwischen Artikelstangen variabel einstellbar sind und eine kontinuierliche oder diskontinuierliche Übergabe von Artikelstangen an eine nachgeordnete Fördereinrichtung oder Verpackungsmaschine bzw. Verpackungsstrecke erfolgen kann und ein intelligentes Anstapeln in der Artikelstangen-Bildungseinrichtung, vorzugsweise einem mehrere Artikelstangenbildner aufweisenden Gruppierrad erfolgt und stets vollständige, eine vorbestimmte Anzahl von Einzelartikeln enthaltende Artikelstangen gebildet werden, unabhängig von vorhergehenden Leertakten im Verpackungsprozess.

6. Verfahren nach zumindest einem der vorhergehenden Ansprüche 1 bis 5, **dadurch gekennzeichnet, dass** der Übergabeeinrichtung, vorzugsweise unter Zwischenschaltung einer Längsfördereinrichtung, ein Stangenpacker nachgeschaltet wird, zum Verpacken der Artikelstangen in einer Zweitverpackung, wie z. B. in Falteinschlag, Fin Seal oder einer Flowpack-Verpackung.

7. Gruppiereinrichtung für kleinstückige, insbesondere in Einzelverpackung verpackte Artikel, zur Bildung von Artikelstangen, vorzugsweise zur Zuführung zu einer Stangenverpackungsmaschine, insbesondere zur Durchführung des Verfahrens und zumindest einem der vorhergehenden Ansprüche 1 bis 6 **gekennzeichnet durch** eine stangenbildende Rotationseinrichtung (2) und eine lineare Stangen-Übergabeeinrichtung (3) zur Verbindung mit einer Stangen-Längsfördereinrichtung (4).

8. Gruppiereinrichtung nach Anspruch 7, **dadurch gekennzeichnet, dass** die stangenbildende Rotationseinrichtung ein Gruppierrad (2) ist.

9. Gruppiereinrichtung nach Anspruch 7 oder 8, **dadurch gekennzeichnet, dass** das Gruppierrad (2) einen Mehrzahl koaxialer, unabhängiger Gruppierradsegmente (2a, 2b, 2c bzw. 2.11, 2.21, 2.31) aufweist, wobei jedes Gruppierradsegment (2a, 2b, 2c bzw. 2.11, 2.21, 2.31) vorzugsweise unabhängig ansteuerbar ist und zumindest eine Tasche (1.1, 2,1, 3.1) zur Aufnahme von Artikeln aufweist, vorzugsweise die Tasche in ihrer Länge im wesentlichen der Länge einer Artikelstange aus einzelnen Artikeln (6) entspricht.

10. Gruppiereinrichtung nach zumindest einem der vorhergehenden Ansprüche 7 bis 9, **dadurch gekennzeichnet, dass** die Gruppierradsegmente (2a, 2b, 2c bzw. 2.11, 2.21, 2.31) achsparallel vorzugsweise koaxial zu einer Rotation um parallele Rotationsachsen oder eine koaxiale gemeinsame Rotationsachse angeordnet, vorzugsweise durch korrespondierende Nabenabschnitte unabhängig voneinander und einzeln drehbar und antreibbar angeordnet sind, insbesondere jedes Gruppierradsegment gegenüberliegende, sich von einem Nabenabschnitt radial erstreckende Stegabschnitte aufweist, deren radial außen liegendes Ende mit einer sich in Umfangsrichtung erstreckenden Tasche versehen ist, wobei vorzugsweise die Gruppierradsegmente jeweils individuell intermittierend oder kontinuierlich, vorzugsweise beschleunigt drehbar sind und vorzugweise die Taschen der Gruppierradsegmente in einer gemeinsamen Rotationsebene angeordnet sind.

11. Gruppiereinrichtung nach zumindest einem der vorhergehenden Ansprüche 7 bis 10, **dadurch gekennzeichnet, dass** ein Abschnitt der gemeinsamen Rotationsebene durch einen rohrartigen Führungskanal von insbesondere U-Profil-förmigen Querschnitt, der sich zwischen einer Artikel-Aufnahmeposition des Gruppierrades und einer Artikel-Abgabeposition erstreckt, gebildet ist und/oder die Taschen eine in Umfangsrichtung U-förmige Gestalt aufweisen.

12. Gruppiereinrichtung nach zumindest einem der vorhergehenden Ansprüche 7 bis 11, **dadurch gekennzeichnet, dass** die Übergabeeinrichtung aus einem Paar opponierend angeordneter Bandförderer besteht, von denen jeder aus einer der Anzahl der Gruppierradsegmente entsprechenden Anzahl von Taktgeberriemen oder -ketten besteht, vorzugsweise die Taktgeberriemen Mitnehmer zur Bildung vorzugsweise konstanter Riementaschen zur Aufnahme von Artikelstangen aufweisen, zur Übergabe an eine Längsfördereinrichtung.

13. Gruppiereinrichtung (1) mit mindestens zwei parallelen, den zu fördernden Gegenstand oder die Artikel (G) bewegenden Förderern (1 a, 1 b, 1 c), wobei jeder Förderer (1 a, 1 b, 1 c) mit zumindest einem, vorzugsweise einem Paar beabstandet zueinander angeordneten Mitnehmern (2, 3, 4, 5, 6, 7, 8, 9, 10) verbunden ist, zwischen denen der zu fördernde Gegenstand (G), insbesondere ein Artikelstapel, aufnehmbar ist, insbesondere nach zumindest einem der vorhergehenden Ansprüche 7 bis 13, **dadurch gekennzeichnet, dass** jeder Förderer (1 a, 1 b, 1 c) mit einer separaten Antriebseinheit (11, 12, 13) verbunden ist und die Antriebseinheiten (11, 12, 13) unabhängig voneinander steuerbar sind, so dass die Fördererer (1 a, 1 b, 1 c) und oder die Mitnehmer (2, 3, 4, 5, 6, 7, 8, 9, 10) und/oder die Mitnehmerpaare der verschiedenen Förderer (1a, 1b, 1c) relativ zueinander verlagerbar sind.

14. Gruppiereinrichtung nach Anspruch 13, **dadurch gekennzeichnet, dass** der Förderer (1 a, 1 b, 1 c) als Riemen, als Kette oder als rotierende Scheibe bzw. Rad ausgebildet ist, vorzugsweise die Mitnehmer (2, 3, 4, 5, 6, 7, 8, 9, 10) der verschiedenen Förderer (1 a, 1 b, 1c) in Förderrichtung fluchtend in einer Ebene liegend ausgerichtet sind, so dass die zu fördernden Gegenstände (G) oder die Artikel entlang einer gemeinsamen Förderbahn gefördert werden, insbesondere die Mitnehmerpaare (2, 3, 4, 5, 6, 7, 8, 9, 10) so ausgerichtet sind, dass sie entlang einer nach außen weisenden Oberseite der Förderer (16) angeordnet sind.

15. Gruppiereinrichtung nach Anspruch 13 oder 14, **dadurch gekennzeichnet, dass** der zu fördernde Gegenstand (G) als ein aus mehreren Einzelprodukten (P) bestehender Stapel ausgebildet ist und diese Einzelprodukte (P) an einer Aufnahmestation (14) zwischen ein Mitnehmerpaar (2) eines Förderers (1 a) einstapelbar sind, wobei die Geschwindigkeit des mit der Aufnahmestation (14) im Eingriff stehenden Förderers (1a) auf die Geschwindigkeit des Einstapelvorganges in der Aufnahmestation (14) abgestimmt ist.

16. Gruppiereinrichtung nach zumindest einem der Ansprüche 13 bis 15, **dadurch gekennzeichnet, dass** der zu fördernde Gegenstand (G) an einer Übergabestation (16) aus dem Mitnehmerpaar (6) eines Förderers (16) entnehmbar ist, wobei die Geschwindigkeit des mit der Übergabestation (16) im Eingriff stehenden Förderers (1b) auf die Geschwindigkeit des Entnahmevorganges in der Übergabestation (16) abstimmbar ist.

17. Gruppiereinrichtung nach zumindest einem der Ansprüche 13 bis 16 **dadurch gekennzeichnet, dass** als Förderer vorzugsweise drei nebeneinander angeordnete, schlaufenförmig umlaufende Riemen (1 a, 1 b, 1 c) vorgesehen sind, die jeweils mit vorzugsweise drei in Förderrichtung gleichmäßig beabstandeten Mitnehmerpaaren (2, 3, 4, 5, 6, 7, 8, 9, 10) verbunden sind, wobei die Mitnehmerpaare (2, 3, 4, 5, 6, 7, 8, 9, 10) so ausgerichtet sind, dass sie fluchtend hintereinander oberhalb des mittleren der drei Riemen (1b) angeordnet sind, und wobei die drei Antriebseinheiten (11, 12, 13) so steuerbar sind, dass während der erste Riemen (1a) mit einem seiner Mitnehmerpaare (2) mit einer Aufnahmestation (14) zur Beladung mit einem Gegenstand (G) im Eingriff steht, vorzugsweise der zweite Riemen (1b) mit einem seiner Mitnehmerpaare (6) mit einer Übergabestation (16) zur Entladung eines Gegenstandes (G) im Eingriff steht und vorzugsweise der dritte Riemen (1c) mit keinem seiner Mitnehmerpaare (8, 9, 10) mit einer der beiden Stationen (14, 16) im Eingriff steht.

18. Verpackungsmaschine mit einer Produktabgabeeinheit, insbesondere einen um eine starre Rotationsachse drehbaren Wendekopf zum Anstapeln verpackter Einzelartikel in Verbindung mit einer Gruppiereinrichtung nach zumindest einem der vorhergehenden Ansprüche 7 bis 12 zur Verbindung mit einem Stangenpacker.

19. Verpackungsmaschine nach Anspruch 18, mit einer Gruppiereinrichtung nach zunächst einem der Ansprüche 7 bis 17 insbesondere zur Durchführung des Verfahrens nach einem der Ansprüche 1 bis 6 mit zwei Fördervorrichtungen (21, 22), die derart zueinander angeordnet sind, dass die Förderer (21 a, 21 b, 22a, 22b) der beiden Fördervorrichtungen (21, 22) sich jeweils in einem einen Förderspalt (18) bildenden Abstand gegenüberliegen und die Antriebseinheiten (23, 24, 25, 26) der einander gegenüberliegenden Förderer (21 a, 21 b, 22a, 22b) so zueinander synchronisiert sind, dass der zu fördernde Gegenstand (G) jeweils zwischen einander gegenüberliegenden Mitnehmerpaaren (27, 31; 29, 33) der beiden Fördervorrichtungen (21, 22) aufnehmbar und im Förderspalt (18) weitertransportierbar ist.

20. Verpackungsmaschine nach Anspruch 18 oder 19, **dadurch gekennzeichnet, dass** im Förderspalt (18) eine Gleitschiene (19) angeordnet ist, auf der der zu fördernde Gegenstand (G) verschiebbar aufliegt, insbesondere die Gleitschiene (19) ihrerseits als Längsfördereinrichtung, vorzugsweise bestehend aus einem umlaufenden, angetriebenen Förderband oder einer Förderkette ausgebildet ist, dass zwischen Mitnehmerabteilungen, die insbesondere variabel sind, zur Aufnahme und zum Transport von Produkt- bzw. Artikelstangen aus einer Mehrzahl von Einzelprodukten einer Einzelartikeln innerhalb der Abteilungen vorgesehen sind.

21. Steuereinrichtung für Produkt-Halteeinrichtungen, insbesondere für eine Verpackungsmaschine zur Verpackung kleinstückiger Produkte (P), wie kleinstückiger Süßwaren, mit einem Rotationskopf (1) mit einer Mehrzahl von mit diesem umlaufenden Klemmeinheiten (3), wobei jede Klemmeinheit (3) ein Klemmbackenpaar (4) sowie zumindest eine Kurvenrolle (7), in Kontakt mit einer ersten Steuerkurve (9) für eine Öffnungs- und Schließbewegung des Klemmbackenpaares (4) aufweist, insbesondere in Verbindung mit einem Verfahren einer Gruppiereinrichtung oder einer Verpackungsmaschine nach einem der vorhergehenden Ansprüche 1 bis 20, **gekennzeichnet durch** eine weitere Einrichtung (13, 16, 18) zur Initiierung einer Öffnungsbewegung des Klemmbackenpaares (4).

22. Steuereinrichtung nach Anspruch 21, **dadurch gekennzeichnet, dass** die weitere Einrichtung (13, 16, 19) eine relativ zu der Klemmeinheit (3) bewegbare, zweite Steuerkurve (19) für die Öffnungsbewegung des Klemmbackenpaares (4) in Abhängigkeit von einem Sensorsignal aufweist.

23. Steuereinrichtung nach Anspruch 21 oder 22, **dadurch gekennzeichnet, dass** die Kurvenrolle (7), die in Kontakt ist mit der ersten Steuerkurve (9) einer ersten Kurvenscheibe (10), die Öffnungs- und Schließbewegung des Klemmbackenpaares (4) steuert.

24. Steuereinrichtung nach Anspruch 22 oder 23, **dadurch gekennzeichnet, dass** die Klemmeinheit (3) eine Tastrolle (8) aufweist, mit der die zweite Steuerkurve (19) in Abhängigkeit von einem Sensorsignal in Eingriff bringbar ist.

25. Steuereinrichtung nach zumindest einem der vorhergehenden Ansprüche 21 bis 24, **dadurch gekennzeichnet, dass** die Kurvenscheibe (10) die erste Steuerkurve (9) bildet und vorzugsweise eine motorisch antreibbare, zweite Kurven- oder Exzenterscheibe lagert, die in Abhängigkeit von einem Steuersignal in einen Bewegungsweg der Tastrolle (8) bringbar ist, zur gewillkürten Einleitung einer Öffnungsbewegung des Haltebackenpaares (4).

26. Steuerungseinrichtung nach zumindest einem der vorhergehenden Ansprüche 21 bis 25, **dadurch gekennzeichnet, dass** die Steuerrolle (7) und die Kurvenrolle (8) in paarweiser Anordnung auf einem Wellenzapfen (24) gelagert sind, die Steuerrolle (7) mit einer ersten Steuerkurve (9) einer stationären Kurvenscheibe (10) für eine planmäßige Öffnungs- und Schließbewegung des Klemmbackenpaares (4) in Eingriff bringbar ist, die Kurvenrolle (8) zum außerplanmäßigen Eingriff mit der zweiten Steuerkurve (19) für eine gewillkürte Öffnungs- und Schließbewegung des Klemmbackenpaares (4) in Abhängigkeit von einem Ausschleusungssignal bringbar ist und auf dem Wellenzapfen (24) vorzugsweise ein Kurvenhebel (21) gelagert ist, der in Klemmeingriff mit einer Lagerungswelle (6) zumindest einer Klemmbacke (4b) eines Klemmbackenpaares (4) ist, wobei die Lagerungswelle (6) drehbar in dem Rotationskopf (1) gelagert ist.

27. Steuereinrichtung nach Anspruch 26, **gekennzeichnet durch** einen Gleitstein (22), gekoppelt **durch** einen Verbindungszapfen (23) mit dem Kurvenhebel (21), wobei der Gleitstein (22)in einem Übertragungshebel (17) gleitverschieblich gelagert ist, der fest mit einer Steuerwelle (5) zumindest einer weiteren Klemmbacke (4a) eines Klemmbackenpaares (4) verbunden ist.

28. Verpackungsmaschine, insbesondere zur Verpackung kleinstückiger Produkte mit einer Mehrzahl rotierender Köpfe zum Transport der Produkte und zur einzelnen Verpackung derselben, **gekennzeichnet durch** eine Steuerungseinrichtung nach zumindest einem der vorhergehenden Ansprüche 21 bis 27.

29. Verpackungsmaschine nach Anspruch 28, **gekennzeichnet durch** eine an eine Einzelverpackung von Produkten (P) sich anschließende Sammelverpackungseinrichtung, wie einen Stangenpacker.

30. Verpackungsmaschine nach Anspruch 28 oder 29 **gekennzeichnet durch** eine Anstapelvorrichtung zur Gruppierung einer vorbestimmten Anzahl von Produkten und einer dieser nachgeordneten Sammelverpackungseinrichtung.
